# EUROPEAN PATENT APPLICATION

(11) **EP 4 841 732 A1**
(43) Date of publication of application: **18.11.2026**
(21) Application number: 25827709.4
(22) Date of filing: 28.03.2025
(51) Int. Cl.: H01M 10/0525, H01M 4/136, H01M 4/04

(54) **LITHIUM-ION SECONDARY BATTERY, BATTERY APPARATUS, ELECTRICAL APPARATUS, PREPARATION METHOD FOR POSITIVE ELECTRODE ACTIVE MATERIAL, AND PREPARATION METHOD FOR POSITIVE ELECTRODE SHEET**

(71) Applicant: Contemporary Amperex Technology Co., Limited, Ningde, Fujian 352100 (CN)
(72) Inventor: LI, Xiaojing, Ningde, Fujian 352100 (CN); JIA, Xiaoyang, Ningde, Fujian 352100 (CN); LIN, Yingxi, Ningde, Fujian 352100 (CN); LIU, Hongyu, Ningde, Fujian 352100 (CN); BIE, Changfeng, Ningde, Fujian 352100 (CN); HE, Siyuan, Ningde, Fujian 352100 (CN); NI, Huan, Ningde, Fujian 352100 (CN); LIU, Na, Ningde, Fujian 352100 (CN); ZHANG, Xiaofeng, Ningde, Fujian 352100 (CN); LI, Jia, Ningde, Fujian 352100 (CN); YE, Xinde, Ningde, Fujian 352100 (CN)
(74) Representative: Lorenz Seidler Gossel Part. mbB
(86) International application number: PCT/CN2025/085973
(87) International publication number: WO 2026/199548

(57) **Abstract**

The present disclosure provides a lithium-ion secondary battery, a battery apparatus, a power consuming apparatus, a preparation method for a positive electrode active material, and a preparation method for a positive electrode plate. The lithium-ion secondary battery includes a positive electrode plate, a negative electrode plate, and an electrolyte. The positive electrode plate includes a positive electrode current collector and a positive electrode film layer arranged on at least one side of the positive electrode current collector. The positive electrode film layer includes a positive electrode active material. The positive electrode active material includes lithium-containing transition metal phosphate particles at least partially provided with a carbon coating material on surfaces. The area proportion of the particles with a particle size greater than or equal to 1.5 µm in a cross section of the positive electrode film layer along a thickness direction of the electrode plate is greater than or equal to 8.0% and less than or equal to 20.0%. The iron dissolution rate of the positive electrode film layer ranges from 658 ppm to 1,921 ppm.

## Description

### TECHNICAL FIELD

The present application relates to the technical field of lithium-ion secondary batteries, and in particular to, a lithium-ion secondary battery, a battery apparatus, a power consuming apparatus, a preparation method for a positive electrode active material, and a preparation method for a positive electrode plate.

### BACKGROUND

In recent years, lithium-ion secondary batteries have been widely used in energy storage power supply systems such as water power stations, thermal power stations, wind power stations, and solar power stations, and in multiple fields such as electric tools, electric bicycles, electric motorcycles, electric vehicles, military equipment, and aerospace.

Positive electrode active material is a crucial component of secondary batteries. Lithium-containing transition metal phosphate materials exhibit structural stability, superior safety performance, and extended cycle life, demonstrating promising development prospects. With increasing market demands for higher energy density and enhanced kinetic performance in secondary batteries based on lithium-containing transition metal phosphate systems, existing technologies struggle to simultaneously improve both properties, becoming a technical problem that needs to be urgently solved in this field.

### SUMMARY

In view of the above problems, the present application provides a battery cell, a battery apparatus, a power consuming apparatus, a preparation method for a positive electrode active material, and a preparation method for a positive electrode plate, which will be respectively described below.

According to a first aspect, the present application provides a lithium-ion secondary battery, which includes a positive electrode plate, a negative electrode plate, and an electrolyte. The positive electrode plate includes a positive electrode current collector and a positive electrode film layer arranged on at least one side of the positive electrode current collector. The positive electrode film layer includes a positive electrode active material. The positive electrode active material includes lithium-containing transition metal phosphate particles at least partially provided with a carbon coating material on surfaces. The area proportion of particles with a particle size greater than or equal to 1.5 µm in a cross section of the positive electrode film layer along a thickness direction of the electrode plate is greater than or equal to 8.0% and less than or equal to 20.0%. The iron dissolution rate of the positive electrode film layer ranges from 658 ppm to 1,921 ppm.

When the area proportion of the particles with a particle size greater than or equal to 1.5 µm in the cross section of the positive electrode film layer along the thickness direction of the electrode plate is less than 8%, it is difficult to achieve high compaction density of the positive electrode plate. When the area proportion of the particles with a particle size greater than or equal to 1.5 µm in the cross section of the positive electrode film layer along the thickness direction of the electrode plate is more than 20%, although it facilitates achieving the high compaction density of the positive electrode plate, it will reduce the contact area between the electrolyte solution and the positive electrode active material, hinder the diffusion of lithium ions towards the positive electrode film layer, increase the diffusion path of lithium ions in the particles, cause severe polarization of the electrode plate locally, increase the impedance of the battery, and significantly deteriorate the kinetic performance of the battery.

Controlling the area proportion of the particles with a particle size greater than or equal to 1.5 µm in the positive electrode film layer to be greater than or equal to 8.0% and less than or equal to 20.0% can reduce the significant cask effect caused by large-sized particles, help to maintain the impedance of the battery at a low level, and improve the kinetic performance of the battery. However, this will limit the further improvement of the compaction density of the electrode plate. In this embodiment of the present application, the iron dissolution rate of the positive electrode film layer is controlled to range from 658 ppm to 1,921 ppm, thus improving the density and integrity of the carbon coating on the surface of the positive electrode active material, making it easier for particles to slip, reducing lattice defects of lithium-containing transition metal phosphate, improving the pressure resistance of particles, reducing the probability of particle collapse and fracture under high roll pressing pressure, and improving the compaction density of the electrode plate. At the same time, a complete and dense carbon coating material helps to improve the electrical contact between the positive electrode active materials, improve the conductivity of the positive electrode active material, and reduce the polarization of the positive electrode active material. Low content of lattice defects facilitates unblocked lithium ion transport channels, improve the lithium ion transport rate of the positive electrode active material, and achieve a balance between the kinetic performance and energy density of the battery.

In any of embodiments, the iron dissolution rate of the positive electrode film layer ranges from 658 ppm to 1,485 ppm. The positive electrode film layer with the iron dissolution rate falling within the above range has relatively fewer lattice defects and a more complete and denser carbon coating material. Fewer crystal defects help to improve the compressive resistance and slipability of the particles in the positive electrode film layer under high roll pressing pressure. High coating integrity facilitates slip between the particles. Dense coating helps to reduce the space occupancy of the carbon layer, further improve the compaction density of the electrode plate, and achieve a balance between the kinetic performance and energy density of the battery.

In any of embodiments, in a coating coverage index B cumulative distribution curve of the positive electrode film layer obtained in a surface scanning mode of a laser microscopic confocal Raman spectrometer, the median B₅₀ of the coating coverage index ranges from 0.35 to 0.48, where the coating coverage index B is I_{P}/I_{D}, where I_{P} represents the intensity of a P-band in a Raman spectrum at 948±100 cm⁻¹, and I_{D} represents the intensity of a D-band in the Raman spectrum at 1,350±100 cm⁻¹. The coating coverage index B value can indirectly reflect the thickness of the carbon coating material on the surfaces of the lithium-containing transition metal phosphate particles. The smaller the thickness of the carbon coating material, the higher the phosphate structural strength detected in the Raman spectrum, and the higher the coating coverage index of the positive electrode film layer.

In any of embodiments, the area proportion of particles with a particle size greater than or equal to 5 µm in a cross section of the positive electrode film layer along a thickness direction of the electrode plate is 0. Research has shown that the particles with a particle size greater than or equal to 5 µm in the positive electrode film layer significantly deteriorate the infiltration of the electrolyte solution in the positive electrode film layer and the diffusion in the active material particles. The area proportion of the particles with a particle size greater than or equal to 5 µm being 0 helps to further reduce the internal resistance of the battery and improve the kinetic performance of the battery.

In any of embodiments, the area proportion of the particles with a particle size greater than or equal to 1.5 µm and less than 5 µm in the cross section of the positive electrode film layer along the thickness direction of the electrode plate ranges from 9.0% to 20.0%, optionally from 10.0% to 20.0%. The area proportion of the particles with a particle size greater than or equal to 1.5 µm and less than 5 µm being within the above range helps to improve the compaction density of the electrode plate, and simultaneously can further reduce the hindering effect of large-sized particles on the surface of the electrode plate on the infiltration and diffusion of the electrolyte solution in the positive electrode film layer, improve the consistency of lithium ion diffusion rate in the positive electrode active material particles, reduce local polarization, and improve the kinetic performance of the battery.

In any of embodiments, the area proportion of particles with a particle size greater than or equal to 1 µm and less than 1.5 µm in a cross section of the positive electrode film layer along a thickness direction of the electrode plate ranges from 15.0% to 25.0%, optionally from 16.0% to 24.0%. The area proportion of the particles with a particle size greater than or equal to 1 µm and less than 1.5 µm being within the above range can make large gaps filled during stacking, forming a "support" structure, reduce the void rate between the particles, and help to enhance the contact between the particles and the overall structural strength, thus on the basis of maintaining good kinetic performance of the battery, further improving the compaction density of the electrode plate and improving the energy density of the battery.

In any of embodiments, the area proportion of particles with a particle size greater than or equal to 200 nm and less than 1,500 nm in a cross section of the positive electrode film layer along a thickness direction of the electrode plate ranges from 73.0% to 80.0%, optionally from 73.0% to 78.0%. The area proportion of the particles with a particle size greater than or equal to 200 nm and less than 1,500 nm may be tested with reference to the method described above. The area of the particles with a particle size greater than or equal to 200 nm and less than 1500 nm is divided by the total area of the counted particles to obtain the area proportion of the particles with a particle size greater than or equal to 200 nm and less than 1500 nm in the cross section of the positive electrode film layer along the thickness direction of the electrode plate.

In any of embodiments, in a graphitization degree C value cumulative distribution curve of the positive electrode film layer obtained in a surface scanning mode of a laser microscopic confocal Raman spectrometer, the median C₅₀ of graphitization degree ranges from 0.95 to 1.20, optionally from 0.98 to 1.15, and further optionally from 1.0 to 1.10, where a graphitization degree C value is I_{G}/I_{D}, where I_{G} represents the intensity of a G-band in a Raman spectrum at 1,580±100 cm⁻¹, and I_{D} represents the intensity of a D-band in the Raman spectrum at 1,350±100 cm⁻¹. The higher the graphitization degree of carbon on the surface of the positive electrode active material, the higher the proportion of graphite structured carbon in the positive electrode film layer, and the easier it is for particles to slip through the highly graphitized carbon structure in the coating material, thus achieving an increase in the compaction density of the electrode plate.

In any of embodiments, in a sphericity area cumulative distribution curve of the particles obtained from the cross section of the positive electrode film layer along the thickness direction of the electrode plate, the median L_{A50} of sphericity ranges from 0.65 to 0.85, optionally from 0.70 to 0.80. The particles with the median L_{A50} of sphericity falling within the above range are approximately spherical. Under an external force, slipping can easily occur between the particles, thus further improving the compaction density of the electrode plate and increasing the energy density of the battery.

In any of embodiments, in a roughness area cumulative distribution curve of the particles obtained from the cross section of the positive electrode film layer along the thickness direction of the electrode plate, the median R_{A50} of roughness of the particles ranges from 0.92 to 0.96. The surfaces of the particles with the median R_{A50} of roughness falling within the above range are relatively smooth, and the friction between the particles is relatively small. Under an external force, slipping can easily occur, thus further improving the compaction density of the electrode plate and increasing the energy density of the battery.

In any of embodiments, based on the total mass of the positive electrode active material, the mass content of a carbon element ranges from 0.8% to 1.8%, optionally from 0.90% to 1.50%. The positive electrode active material has a relatively low content of carbon coating compared to lithium-containing phosphate positive electrode active materials in the existing technology, thus further increasing the load of lithium-containing phosphate in the positive electrode plate and improving the energy density of the lithium-ion secondary battery.

In any of embodiments, the lithium-iron antisite defect concentration of the positive electrode active material ranges from 0.1% to 1.5%, optionally from 0.3% to 1.0%. During preparation and cycling, lithium vacancies inevitably form within the crystal structure of the positive electrode active material. The lithium vacancies not only cause the oxidation of ferrous ions to ferric ions, but also induce partial migration of iron ions into lithium sites, forming lithium-iron antisite defects, blocking the one-dimensional diffusion channel for lithium ions, and adversely affecting the solid-phase transport of lithium ions. The positive electrode active material in this embodiment of the present application exhibits low lithium-iron antisite defects, thus facilitating uniform solid-phase transport of lithium ions and further improving the kinetic performance of the lithium-ion secondary battery.

In any of embodiments, the lithium-containing transition metal phosphate includes a component represented by the following general formula: LiₘFeₓP_{y}OⱼQ_{q}, where Q includes one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

The selection of an appropriate modifying element Q can improve the lattice variation rate of the positive electrode active material during lithium deintercalation and intercalation, reduce the oxygen activity on the surfaces of particles, and enhance the structural stability of the material, thus improving the gram capacity utilization of the material during cycling and further enhancing the cycling stability of the lithium-ion secondary battery.

In any of embodiments, the positive electrode active material includes one or more of lithium iron phosphate, and doped modified materials and coated modified materials thereof.

In any of embodiments, the positive electrode active material includes a titanium element, and based on the total mass of the positive electrode active material, the mass content of the titanium element ranges from 2,000 ppm to 6,000 ppm. The high addition amount of the titanium element does not form a harmful impurity phase that negatively impacts the energy density and kinetic performance of the battery. Although the exact reason remains unclear, it is hypothesized that the titanium element may form a fast-ion conductor in combination with phosphate groups and other elements (e.g., lithium), thus enhancing the kinetic performance of the battery on the contrary.

In any of embodiments, the powder tap density of the positive electrode active material ranges from 0.70 g/cm³ to 1.50 g/cm³, optionally from 0.70 g/cm³ to 1.20 g/cm³.

The effective gradation formed independently by the positive electrode active material in this embodiment of the present application is limited, and it has a relatively low powder tap density. With the high integrity and density of the carbon coating material of the positive electrode active material in the positive electrode film layer, it is easy to compress the voids between the particles under the external force to achieve an increase in powder compaction density.

In any of embodiments, the powder compaction density of the positive electrode active material under a pressure of 3T ranges from 2.50 g/cm³ to 2.70 g/cm³, optionally from 2.52 g/cm³ to 2.68 g/cm³.

Although the area proportion of the particles with a particle size greater than or equal to 1.5 µm in the positive electrode film layer is low, due to the low iron dissolution rate of the positive electrode film layer, it indicates that the surface of the positive electrode active material has a high-density and intact carbon coating material, thus still achieving high compaction density under the external force, and providing a material basis for improving the compaction density of the electrode plate and preparing a high-energy-density lithium-ion secondary battery.

In any of embodiments, the powder resistivity of the positive electrode active material under a pressure of 8 MPa ranges from 0.5 Ω·cm to 30.0 Ω·cm, optionally from 2.0 Ω·cm to 20.0 Ω·cm. The carbon coating material on the surface of the positive electrode active material has high integrity and compactness, thus easily achieving the fast conduction of electrons between the particles with the help of the coating structure, making the positive electrode active material have low powder resistivity, helping to enhance the solid-phase transport of electrons, and further improving the kinetic performance of the battery.

In any of embodiments, the discharge gram capacity of the positive electrode active material at a discharge rate of 1 C ranges from 135 mAh/g to 150 mAh/g. The positive electrode active material has a high discharge gram capacity at a rate of 1 C, indicating that it has good charge and discharge ability, thus helping to improve the kinetic performance of the battery.

In any of embodiments, the discharge capacity ratio η of the positive electrode active material discharged to 3.2 V is ≥ 85%, where η is defined as: at room temperature, a button battery containing the positive electrode active material is charged and discharged twice at a constant current at a rate of 0.1 C within a voltage range from 2.0 V to 3.75 V, and then charged and discharged once at a constant current at a rate of 1 C, and in a charge-discharge test at the rate of 1 C, a capacity value extracted at a discharge voltage of 3.2 V is denoted as C₁, and a capacity value extracted at a discharge voltage of 2.0 V is denoted as C₂, where η=C₁/C₂, where a charging process includes constant-voltage charging, with a constant voltage of 3.75 V and a constant-voltage cutoff current of 50 µA.

The discharge capacity ratio of the positive electrode active material discharged to 3.2 V in the lithium-ion secondary battery being high indicates that the positive electrode active material has good kinetic performance. At the same time, the high η value indicates that the lithium-ion secondary battery containing the positive electrode active material still has high voltage when discharged to a low state of charge (SOC), thus helping to maintain good power performance.

In any of embodiments, in a 0.1 C discharge curve of a button battery containing the positive electrode active material, a discharge plateau exists within a voltage range from 2.5 V to 2.9 V. This helps to increase the discharge interval of the battery and improve the energy density of the battery.

In any of embodiments, based on the total mass of the positive electrode film layer, the mass content of a conductive agent ranges from 0 to 1.5%, and is optionally 0.

The particles in the positive electrode film layer have high sphericity, so the particles can be tightly stacked during roll pressing, and the particles have good contact with each other, so that the electron conductivity between the particles in the positive electrode film layer is good, thus reducing or even eliminating the use of the conductive agent in the positive electrode film layer, helping to further increase the load of the positive electrode active material and improving the energy density of the lithium-ion secondary battery.

In any of embodiments, the positive electrode film layer further includes a binder, and based on the total mass of the positive electrode film layer, the mass content of the positive electrode active material ranges from 95.5% to 99.5%, optionally from 96.5% to 99.5%; the mass content of the binder ranges from 0.5% to 3%.

The mass content of the positive electrode active material and the mass content of the binder falling within the above range can effectively increase the load of the active material in the positive electrode film layer per unit volume, maintain good internal adhesion, reduce the probability of powder loss, expansion and cracking problems, and improve the energy density of the secondary battery while considering the safety performance.

In any of embodiments, the single-side areal density of the positive electrode film layer ranges from 300 mg/1,540 mm² to 450 mg/1,540 mm². The positive electrode film layer with the areal density falling within the above range can help to improve the energy density of the lithium-ion secondary battery.

In any of embodiments, in a fully discharged state of the lithium-ion secondary battery, the compaction density of the positive electrode film layer ranges from 2.51 g/cm³ to 2.73 g/cm³.

In any of embodiments, in the fully discharged state of the lithium-ion secondary battery, the compaction density of the positive electrode film layer ranges from 2.55 g/cm³ to 2.70 g/cm³.

The compaction density of the positive electrode film layer being within the above range helps to improve the energy density of the lithium-ion secondary battery.

In any of embodiments, the positive electrode film layer satisfies at least one of the following conditions: (1) in the fully discharged state of the lithium-ion secondary battery, the compaction density of the positive electrode film layer ranges from 2.51 g/cm³ to 2.73 g/cm³, and the porosity of the positive electrode film layer in the cross section of the positive electrode film layer along the thickness direction of the electrode plate ranges from 10% to 22%; and (2) in the fully discharged state of the lithium-ion secondary battery, the compaction density of the positive electrode film layer ranges from 2.55 g/cm³ to 2.70 g/cm³, and the porosity of the positive electrode film layer in the cross section of the positive electrode film layer along the thickness direction of the electrode plate ranges from 10% to 20%.

The lower the porosity in the cross section of the positive electrode film layer, on the one hand, the better the particle gradation of large, medium, and small particles in the positive electrode film layer, and the higher the compaction density. On the other hand, if the porosity is low under the same gradation and roll pressing force, it means that the particles are prone to slip between each other, thus reducing the risk of overpressure and stress concentration in the film layer, further reducing the probability of delamination of the positive electrode film during long cycling, and helping to improve the long-term cycle performance of the battery.

In any of embodiments, the positive electrode plate includes a primer layer, and the primer layer is arranged between the positive electrode film layer and the current collector; the primer layer satisfies at least one of the following conditions: (1) the primer layer includes carbon-based particles, and the distribution density of the carbon-based particles with a particle size greater than 100 nm in the primer layer is ≤ 10 pcs/10 µm; (2) the compaction density of the positive electrode plate in a fully discharged state is greater than or equal to 2.4 g/cm³, and the single-side thickness of the primer layer ranges from 1 µm to 4 µm; and (3) the compaction density of the positive electrode plate in the fully discharged state is greater than or equal to 2.5 g/cm³, and the single-side thickness of the primer layer ranges from 2 µm to 4 µm.

The primer layer helps to improve the electric conductivity and adhesion between the positive electrode film layer and the current collector, reduce the occurrence of delamination between the positive electrode film layer and the current collector during cycling, and improve the kinetic performance of the battery at the same time.

With the increase of the compaction density of the electrode plate, the compressive effect of the large-particle lithium-containing phosphate material (e.g., with a particle size greater than 1 µm) in the positive electrode film layer on the primer layer becomes more significant. Therefore, stress concentration is prone to occur at large particle sites, and even causes damage to the current collector by passing through the primer layer. Increasing the thickness of the primer layer helps to improve the stress concentration phenomenon in the electrode plate and further increase the ultimate compaction density of the electrode plate.

According to a second aspect, the present application provides a battery apparatus, which includes the lithium-ion secondary battery according to the first aspect of the present application.

According to a third aspect, the present application provides a power consuming apparatus, which includes at least one of the lithium-ion secondary battery according to the first aspect of the present application and the battery apparatus according to the third aspect of the present application.

According to a fourth aspect, the present application provides a preparation method for a positive electrode active material, which includes: obtaining a mixed raw material including a carbon source, a lithium source, an iron source, and a phosphorus source, where the carbon source includes a polymer carbon source, the mass content of a trivalent iron element in the iron source is less than or equal to 0.08%, and the molar ratio of lithium to iron in the mixed raw material is greater than or equal to 1 and less than or equal to 1.05; performing grinding to obtain a mixed slurry; drying the mixed slurry to obtain precursor powder; and sintering the precursor powder and performing crushing to obtain the positive electrode active material, where the sintering includes a first temperature and a second temperature, and the second temperature for the sintering ranges from 750°C to 800°C.

The polymer carbon source has relatively low decomposition temperature and graphitization temperature, so that the carbon coating material on the surface of the positive electrode active material can be decomposed to form a carbon layer at lower sintering temperatures, thus hindering the growth and sintering of lithium-containing transition metal phosphate grains, and helping to reduce the particle size of the positive electrode active material. Controlling the mass content of the trivalent iron element helps to improve the uniformity and consistency of the carbon coating material. The preparation method provided in this embodiment of the present application optimizes the quality of carbon coating and improves the particle size distribution and reduces crystal defects in the positive electrode active material by controlling the carbon source, iron source, and sintering parameters, providing a material basis for the preparation of the positive electrode film layer.

According to a fifth aspect, the present application provides a preparation for an electrode plate, which includes: sequentially adding a binder, a conductive agent, and the positive electrode active material prepared by adopting the preparation method according to the fourth aspect of the present application, performing dry mixing, then adding a solvent, and performing stirring and viscosity adjustment to obtain a finished slurry; and transfer-coating the finished slurry to at least one side of a current collector, and preforming drying and hot-pressing to obtain the positive electrode film layer.

In any of embodiments, the hot-pressing includes at least three times of hot roll pressing, the hot roll pressing force increases sequentially, and the hot roll pressing force respectively ranges from 20 tons to 50 tons, from 50 tons to 70 tons, and from 70 tons to 90 tons; and the hot roll temperature ranges from 40°C to 80°C, the electrode plate is heated before entering hot roll compaction for a first time, and the temperature for the heating ranges from 40°C to 50°C.

In any of embodiments, the stirring includes pre-stirring and main stirring, the revolution speed for the main stirring ranges from 20 rpm to 30 rpm, and the rotation speed ranges from 1450 rpm to 1550 rpm.

The positive electrode active material prepared by adopting the above hot-pressing process combined with the preparation method according to the fourth aspect helps to further reduce the cross-sectional porosity of the positive electrode film layer, improve the ultimate compaction density of the electrode plate, and improve the energy density of the battery.

The above description only refers to an overview of the technical solution of the present application. In order to understand the technical means of the present application more clearly, it can be implemented according to the content of the description. In order to make the above-mentioned and other purposes, features and advantages of the present application more apparent, the specific embodiments of the present application are listed below.

### BRIEF DESCRIPTION OF THE DRAWINGS

FIG. 1 is a scanning electron microscopy image of a cross section of a positive electrode film layer along a thickness direction of an electrode plate according to an embodiment of the present application;
FIG. 2 is a schematic diagram of a lithium-ion secondary battery according to an embodiment of the present application;
FIG. 3 is a schematic exploded view of a lithium-ion secondary battery according to an embodiment of the present application;
FIG. 4 is a schematic diagram of a battery module according to an embodiment of the present application;
FIG. 5 is a schematic diagram of a battery pack according to an embodiment of the present application;
FIG. 6 is a schematic exploded view of the battery pack shown in FIG. 5;
FIG. 7 is a schematic diagram of a power consuming apparatus using a lithium-ion secondary battery as a power supply according to an embodiment of the present application; and
FIG. 8 is a porosity test image of a positive electrode film layer in a cross section along a thickness direction according to an embodiment of the present application.

Description of numeral references:
1-battery pack; 2-upper box; 3-lower box; 4-battery module; 5-secondary battery; 51-case; 52-electrode assembly; and 53-cover plate

### DETAILED DESCRIPTION

Hereinafter, embodiments of a lithium-ion secondary battery, a battery apparatus, and a power consuming apparatus of the present application are specifically disclosed in the detailed description with reference to the accompanying drawings as appropriate. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may include or exclude end values, and may be freely combined, that is, any lower limit may be combined with any upper limit to form a new range. For example, if ranges of 60-120 and 80-110 are listed for a particular parameter, it is to be understood that ranges of 60-110 and 80-120 are also expectable. Additionally, if the minimum range values 1 and 2 and the maximum range values 3, 4 and 5 are listed, the following ranges are all expectable: from 1 to 3, from 1 to 4, from 1 to 5, from 2 to 3, from 2 to 4, and from 2 to 5. In the present application, unless otherwise stated, the numerical range "from a to b" represents an abbreviated representation of any combination of real numbers between a and b, where both a and b are real numbers. For example, the numerical range "from 0 to 5" means that all real numbers between 0 and 5 are listed herein, and "from 0 to 5" is merely an abbreviated representation of the combination of these numbers. In addition, when a parameter is expressed as an integer ≥2, it is equivalent to disclosing that the parameter is, for example, and integer such as 2, 3, 4, 5, 6, 7, 8, 9, 10, 11, 12, or the like.

Unless otherwise specified, all the examples and optional examples of the present application can be combined with each other to form new technical solutions, and such technical solutions should be considered to be included in the disclosure of the present application.

Unless otherwise specified, all the technical features and optional technical features of the present application can be combined with each other to form new technical solutions, and such technical solutions should be considered to be included in the disclosure of the present application.

Unless otherwise specified, all steps in the present application may be performed sequentially or randomly, and preferably, sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

In addition, in the present application, the term "multiple" or "a plurality of" indicates two or more.

Unless otherwise stated, the terms used in the present application have well-known meanings as commonly understood by those skilled in the art.

Unless otherwise stated, the values of the parameters mentioned in the present application may be determined by various test methods commonly used in the art, and for example, may be determined according to the test methods given in the examples of the present application. Unless otherwise stated, the testing temperature for each parameter is 25°C.

A battery mentioned in an embodiment of the present application may be a single physical module including one or more lithium-ion secondary batteries to provide a higher voltage and a higher capacity. For example, the battery mentioned in the present application may include a lithium-ion secondary battery, a battery module, a battery pack, or the like.

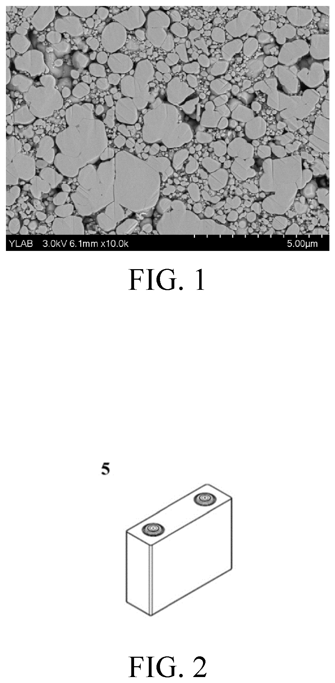

The lithium-ion secondary battery is the smallest unit constituting the battery, and can achieve the functions of charging and discharging independently. The lithium-ion secondary battery may be in a cylindrical shape, in a cuboidal shape, or in other shapes, which is not limited in the embodiments of the present application. FIG. 2 shows a lithium-ion secondary battery 5 having a cuboidal structure as an example.

The lithium-ion secondary battery includes an electrode assembly and an electrolyte.

The lithium-ion secondary battery may further include an outer package. The outer package may be configured to package the electrode assembly and the electrolyte. The outer package may be a hard case, for example, a hard plastic case, an aluminum case, or a steel case. The outer package may alternatively be a soft pack, for example, a pouch type soft pack. The material of the soft package may be plastic, such as one or more of polypropylene (PP), polybutylene terephthalate (PBT), and polybutylene succinate (PBS).

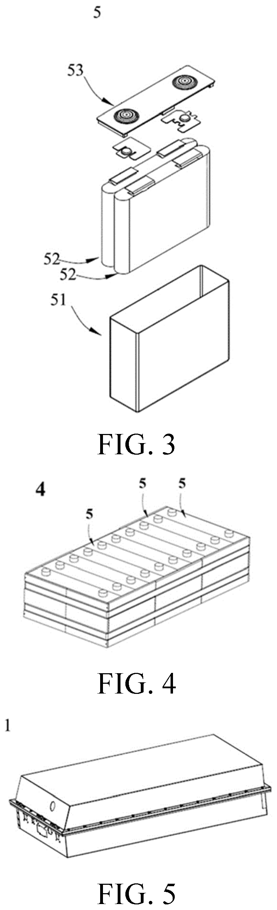

In some embodiments, as shown in FIG. 3, the outer package may include a case 51 and a cover plate 53. The case 51 may include a bottom plate and a side plate connected to the bottom plate. The bottom plate and the side plate enclose to form an accommodating cavity. The case 51 has an opening in communication with the accommodating cavity. The cover plate 53 is configured to cover the opening to close the accommodating cavity. The electrode assembly 52 is encapsulated in the accommodating cavity. The number of the electrode assemblies 52 included in the lithium-ion secondary battery 5 may be one or more, which may be adjusted according to requirements. The electrode assembly typically includes a positive electrode plate and a negative electrode plate. The negative electrode plate is an electrode where lithium ion intercalation or lithiation occurs during charging and lithium ion deintercalation or delithiation occurs during discharging. The positive electrode plate is an electrode where lithium ion deintercalation or delithiation occurs during charging and lithium ion intercalation or lithiation occurs during discharging.

When there are multiple lithium-ion secondary batteries, the multiple lithium-ion secondary batteries may be connected in series, in parallel, or in series-parallel through busbar components. In some embodiments, the battery may be a battery module; when there are multiple lithium-ion secondary batteries, the multiple lithium-ion secondary batteries are arranged and fixed to form a battery module. In some embodiments, the battery may be a battery pack, the battery pack includes a box body and a lithium-ion secondary battery, and the lithium-ion secondary battery or the battery module is accommodated in the box body. In some embodiments, the box body may be used as a part of a chassis structure of a vehicle. For example, a part of the box body may be at least a part of a floor of the vehicle, or a part of the box body may be at least a part of a cross beam and a longitudinal beam of the vehicle.

In some embodiments, the battery may be an energy storage apparatus. The energy storage apparatus includes an energy storage container, an energy storage electric cabinet, and the like.

In some embodiments, the lithium-ion secondary batteries may be assembled into a battery module, there may be multiple lithium-ion secondary batteries included in the battery module, and the specific number may be adjusted according to the application and capacity of the battery module. FIG. 4 is a schematic diagram of a battery module 4 as an example. As shown in FIG. 4, in the battery module 4, multiple lithium-ion secondary batteries 5 may be sequentially arranged along a length direction of the battery module 4. Of course, they may also be arranged in any other manner. The multiple lithium-ion secondary batteries 5 may be further fixed through fasteners.

Optionally, the battery module 4 may further include a shell with an accommodating space, and the multiple lithium-ion secondary batteries 5 are accommodated in the accommodating space.

In some embodiments, the battery modules may be further assembled into a battery pack, and the number of the battery modules included in the battery pack may be adjusted according to the application and capacity of the battery pack.

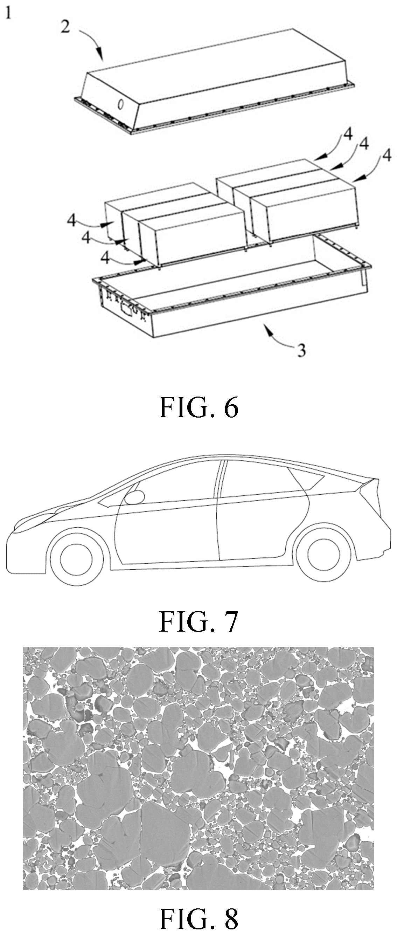

FIG. 5 and FIG. 6 are schematic diagrams of a battery pack 1 as an example. As shown in FIG. 5 and FIG. 6, the battery pack 1 may include a box body and multiple battery modules 4 arranged in the box body. The box body includes an upper box 2 and a lower box 3. The upper box 2 is configured to cover the lower box 3 to form an enclosed space for accommodating the battery modules 4. The multiple battery modules 4 may be arranged in the box body in any manner.

Lithium-containing transition metal phosphate materials have been widely used in lithium-ion batteries due to their stable structure, good safety, and long cycle life. However, they have the problems of low electron conductivity and low stacking efficiency, which in turn makes it difficult to further effectively increase the load of lithium phosphate in the electrode plate, thus failing to meet the requirements of high-energy-density batteries.

In order to further improve the energy density of batteries and increase the compaction density of electrode plates, the commonly used method in the industry is to increase the particle gradation in the electrode plates. To improve the particle gradation, it is necessary to increase the proportion of large particles. However, research has shown that when the proportion of large particles in the electrode plate exceeds a specific range, it sacrifices the kinetic performance of the battery. How to obtain a battery that balances energy density and kinetic performance is an urgent technical problem that needs to be solved in this field.

According to a first aspect, the present application provides a lithium-ion secondary battery. The lithium-ion secondary battery includes a positive electrode plate, a negative electrode plate, and an electrolyte. The positive electrode plate includes a positive electrode current collector and a positive electrode film layer arranged on at least one side of the positive electrode current collector. The positive electrode film layer includes a positive electrode active material. The positive electrode active material includes lithium-containing transition metal phosphate particles at least partially provided with a carbon coating material on surfaces. The area proportion of particles with a particle size greater than or equal to 1.5 µm in a cross section of the positive electrode film layer along a thickness direction of the electrode plate is greater than or equal to 8.0% and less than or equal to 20.0%. The iron dissolution rate of the positive electrode film layer ranges from 658 ppm to 1921 ppm.

When the area proportion of the particles with a particle size greater than or equal to 1.5 µm in the cross section of the positive electrode film layer along the thickness direction of the electrode plate is less than 8%, it is difficult to achieve high compaction density of the positive electrode plate. When the area proportion of the particles with a particle size greater than or equal to 1.5 µm in the cross section of the positive electrode film layer along the thickness direction of the electrode plate is more than 20%, although it facilitates achieving the high compaction density of the positive electrode plate, it will reduce the contact area between the electrolyte solution and the positive electrode active material, hinder the diffusion of lithium ions towards the positive electrode film layer, increase the diffusion path of lithium ions in the particles, cause severe polarization of the electrode plate locally, increase the impedance of the battery, and significantly deteriorate the kinetic performance of the battery.

Controlling the area proportion of the particles with a particle size greater than or equal to 1.5 µm in the positive electrode film layer to be greater than or equal to 8.0% and less than or equal to 20.0% can reduce the significant cask effect caused by large-sized particles, help to maintain the impedance of the battery at a low level, and improve the kinetic performance of the battery. However, this will limit the further improvement of the compaction density of the electrode plate. In this embodiment of the present application, the iron dissolution rate of the positive electrode film layer is controlled to range from 658 ppm to 1,921 ppm, thus improving the density and integrity of the carbon coating on the surface of the positive electrode active material, making it easier for particles to slip, reducing lattice defects of lithium-containing transition metal phosphate, improving the pressure resistance of particles, reducing the probability of particle collapse and fracture under high roll pressing pressure, and improving the compaction density of the electrode plate. At the same time, a complete and dense carbon coating material helps to improve the electrical contact between the positive electrode active materials, improve the conductivity of the positive electrode active material, and reduce the polarization of the positive electrode active material. Low content of lattice defects facilitates unblocked lithium ion transport channels, improve the lithium ion transport rate of the positive electrode active material, and achieve a balance between the kinetic performance and energy density of the battery.

The lithium-containing transition metal phosphate refers to a phosphate material containing lithium and a transition metal element, which may be detected through any known method in this field. For example, it may be detected by jointly using an X-ray diffractometer (XRD) and an energy spectrum analyzer.

The carbon coating material arranged on at least part of the surface of the lithium-containing transition metal phosphate may be detected through any known method in this field. As an example, characterizing the lithium-containing transition metal phosphate by jointly using a transmission electron microscope and an energy spectrum analyzer can observe the presence of the carbon coating material on at least part of the surface of the lithium-containing transition metal phosphate.

In the present application, the term "particle" refers to a particle with an identifiable complete boundary in the positive electrode film layer in the field of view at a certain magnification, such as 10 thousand magnification. Defects and scratches may exist inside the particle, but complete boundaries that are sufficient to divide the particle cannot be identified inside the particle.

In some embodiments, the area proportion of the particles with a particle size greater than or equal to 1.5 µm in the cross section of the positive electrode film layer along the thickness direction of the electrode plate is greater than or equal to 8.0% and less than or equal to 20.0%.

In some embodiments, the area proportion of the particles with a particle size greater than or equal to 1.5 µm in the cross section of the positive electrode film layer along the thickness direction of the electrode plate is optionally 8.0%, 9.0%, 10.0%, 11.0%, 12.0%, 13.0%, 14.0%, 15.0%, 16.0%, 17.0%, 18.0%, 19.0%, 20.0%, or within a numerical range between any two thereof.

The specific method for identifying the particles in the cross section of the positive electrode film layer along the thickness direction of the electrode plate is as follows: cutting off the positive electrode film layer along the thickness direction of the electrode plate by an argon ion beam (for example, an optional device model: Leica EMTIC3XCP, working voltage: 6 kV, working duration: 6 h), exposing the cross section, and observing the cross section of the positive electrode film layer along the thickness direction of the electrode plate using a scanning electron microscope (for example, an optional device model: Hitachi SU8230, working voltage: 3 kV, beam current: high, probe model: U (LA100), working distance: < 5 mm). A field emission scanning electron microscope is used to collect images in the secondary electron mode at non-edge positions in the cross section of the positive electrode film layer (after the edge of the electrode plate is observed under the scanning electron microscope, the field of vision is adjusted to the center of a sample). Electron microscopy images are taken at 10 k magnification, and the particles in the electron microscopy images are analyzed using ImageJ software (1.46r, win64 version). The specific method for using ImageJ software is as follows: loading a scanning electron microscopy image to be analyzed, as shown in FIG. 1; using Cellpose plugin software to identify the particles, and performing manual calibration based on this; using ImageJ to read and statistically collect data. The specific method for identifying the particles using the Cellpose plugin software is as follows: setting a segmentation diameter parameter (diameter in a segmentation module) into 15 pixels, clicking "run cyto3" for particle identification; manually identifying particles in the image that have not been identified by the software, have not been fully identified by the software, or have been erroneously identified. The particles in the image that have not been identified by the software or have not been fully identified by the software or have been erroneously identified mainly include the following: 1. particles are too large or have scratches on their surfaces, resulting in that the particles cannot be identified or cannot be fully identified; 2. during the argon ion beam cutting process, scratches may be generated on the surfaces of the particles, and the software may mistake the scratches for particle boundaries during the identification process, resulting in identification errors; 3. the particles are too small, so that they are not successfully identified; 4. the particles are located at the edges of the field of view of the electron microscope, the interior of the particles is penetrated by the edges, the morphology is not fully displayed, and local areas are identified instead of the whole, resulting in identification errors. The particles that have not been identified or have been erroneously identified mentioned above are manually calibrated according to the following specific process: deleting the particles located at the four edges of the scanning electron microscope with incomplete representation; determining whether there is a gap or scratch inside any other particle that has not been identified or has been erroneously identified; if there is no gap or scratch inside the particle, determining it as a single particle and manually identifying the particle according to observed particle boundaries; in response to the presence of gap or scratch inside the particle, determining whether the gap or scratch penetrates the particle; if the gap or scratch does not penetrate the particle, determining the particle as a single particle and manually identifying the particle; in response to the gap or scratch penetrating the particle, determining whether the gap or scratch is linear or irregular; in response to the gap or scratch being irregular, determining the gap or scratch as a boundary between particles, and dividing the particles along this boundary; in response to the gap or scratch being linear, performing contrast comparison; in response to the contrast being not obvious and having no sense of cracking, determining the gap or scratch as a scratch and identifying the particle as a single particle; and in response to the contrast being strong and having a sense of cracking, determining the gap or scratch as a boundary between particles and identifying the particles as two particles. After manual identification, information unrelated to particles in the automatic image processing process is deleted, thus completing the determination and identification of the particles in the image. After manual identification, information unrelated to particles in the automatic image processing process is deleted, thus completing the determination and identification of the particles in the image.

The area of the particles in the cross section of the positive electrode film layer along the thickness direction of the electrode plate is counted according to the following specific method. The image after particle determination and identification are imported into ImageJ software for analysis, and scale setting is completed according to the scanning electron microscope image. The specific process is as follows: using a line tool to measure the pixel length of the scale in the electron microscope image, and using the ratio of the pixel length to the length represented by the scale (as shown in FIG. 1c, the scale length is 5.00 µm) as a reference scale, so that the actual length can be calculated by measuring the pixel length; analyzing the particle size of the particles in the image using the "Feret diameter" and "Area" analysis functions. According to the software manual (ImageJUserGuideIJ 1.46r), the "Feret" parameter obtained through analysis represents the maximum distance between all parallel lines in the two-dimensional projection of the particle, thus characterizing the particle size of the particle; the "Area" parameter represents the pixel area of the particle. Due to the significant errors in the statistical process of particles with a particle size less than 50 nm, it is difficult to accurately identify them. In addition, the particle size of the conductive agent is generally less than 50 nm, which will cause significant errors in the statistical results. Therefore, the particles with a particle size less than 50 nm are not included in the particle size statistical process in the present application. According to the above method, in order to meet the statistically significant sample size, at least 10 scanning electron microscope images are collected for each electrode plate, and the area of no less than 5,000 particles is counted. The sum of the "Area" parameters of the particles with a particle size greater than or equal to 1.5 µm and the sum of the "Area" parameters of all particles are calculated respectively as the area of the particles with a particle size greater than or equal to 1.5 µm and the total area of the counted particles. The area of the particles with a particle size greater than or equal to 1.5 µm is divided by the total area of the counted particles to obtain the area proportion of the particles with a particle size greater than or equal to 1.5 µm in the cross section of the positive electrode film layer along the thickness direction of the electrode plate.

The morphology of the cross section of the positive electrode film layer along the thickness direction of the electrode plate is as shown in FIG. 1, which is different from the state of the positive electrode active material in the Malvern laser scattering method, and also different from the state of the positive electrode active material when the positive electrode active material is observed directly by scanning electron microscopy. The particles in the positive electrode film layer exhibit a good dispersion state under the action of roll pressing force. Observing the positive electrode film layer helps to effectively characterize the objective situation of the particle size and area distribution of the particles in the positive electrode film layer.

In the compaction process, the positive electrode film layer undergoes compaction in the thickness direction. Therefore, the cross section of the positive electrode film layer along the thickness direction of the electrode plate can better reflect the true compaction situation of the particles inside the film layer on a spatial scale compared to the surface of the positive electrode film layer. The area proportion of the particles with a particle size greater than or equal to 1.5 µm in the cross section of the positive electrode film layer along the thickness direction of the electrode plate can intuitively reflect the proportional relationship between the partial particle area in this particle size range and the overall particle area, and reflect the distribution of particles in this particle size range.

It can be understood that the particles in the cross section of the positive electrode film layer along the thickness direction of the electrode plate, especially those with a particle size of 50 nm or above, mainly come from the positive electrode active material. Therefore, in this embodiment of the present application, by observing and counting the area of the particles in the cross section of the positive electrode film layer, the distribution situation of lithium-containing transition metal phosphate particles in the positive electrode film layer in the electrode plate can be accurately and objectively reflected.

In the existing technology, the Malvern laser diffraction method is commonly adopted to count the particle size of the positive electrode active material. However, the applicant's research has shown that since the lithium phosphate is prone to agglomeration, the test results obtained using the Malvern laser diffraction method based on the principle of laser scattering are often the measured particle sizes of particle aggregates, which cannot truly reflect the particle size of the positive electrode active material, let alone the dispersion state of the positive electrode active material in the film layer. This is because the dispersion degree of the positive electrode active material in the film layer will be increased in the film forming roll pressing process. The test results obtained using the Malvern laser diffraction method are closely related to the particle size, specific surface area, and agglomeration degree of the positive electrode active material. Therefore, the particle size obtained using the Malvern laser diffraction method cannot be equated or extrapolated to the particle size counted in this embodiment of the present application.

Those skilled in the art may achieve the regulation of the particle size of the particles through any known process. As an example, by regulating the temperature and time in the preparation process of the positive electrode material, the growth rate and time of the positive electrode material can be controlled. By utilizing the mechanical force of crushing and grinding processes, a raw material is processed to a target particle size distribution range, thus achieving the adjustment of the particle size. By adopting screening and gradation devices to perform particle size separation on the particle system, the required particle size proportion can be obtained. By precisely controlling the feeding rate, adjusting the residence time and stress state of the particles in the device, it also helps to achieve the regulation of the particle size of the particles.

In some embodiments, the iron dissolution rate of the positive electrode film layer ranges from 658 ppm to 1,921 ppm.

In some embodiments, the iron dissolution rate of the positive electrode film layer is optionally 658 ppm, 700 ppm, 800 ppm, 890 pm, 900 ppm, 1,000 ppm, 1,058 ppm, 1,076 ppm, 1,100 ppm, 1,143 ppm, 1,200 ppm, 1,236 ppm, 1,300 ppm, 1,311 ppm, 1,384 ppm, 1,349 ppm, 1,400 ppm, 1,485 ppm, 1,500 ppm, 1,531 ppm, 1,600 ppm, 1,700 ppm, 1,800 ppm, 1,921 ppm, or within a numerical range between any two thereof.

The iron dissolution rate of the positive electrode film layer may be tested by adopting a well-known method in this field. As an example, after disassembling the electrode plate from the battery and washing, it is punched into small circular pieces with a diameter of 14 mm. Multiple small circular piece samples are taken to make the total mass of the samples about 5 g. The samples are added to 100.3 g of ascorbic acid solution with a mass concentration of 0.3% (the solvent is ultra-pure water). Stirring is performed at a speed of 500 rpm for 305 min, and then the solution is quickly aspirated with a 5 mL needle tube. The solution is filtered into a test tube using a filter head with a pore size of 0.45 µm. 1 mL of supernatant is aspirated with a pipette, added into a glass volumetric flash, diluted 50 times, and tested using an inductively coupled plasma-optical emission spectrometer (ICP-OES) to obtain the iron element concentration in the solution. The iron dissolution rate of the positive electrode film layer is calculated through the following formula: (ICP tested iron element concentration×volume of solution/mass of solution for volumetric dilution)×100.3 g/(mass of electrode plate in small circular pieces - mass of current collector in small circular pieces, where the volume of the solution is 50 ml, and the mass of the solution for volumetric dilution is 1 g. Preferably, the mass of the current collector in the small circular pieces is obtained by multiplying the thickness of the small circular pieces by the area and the density. The thickness of the small circular pieces may be equivalently measured by measuring the thickness of the current collector in the uncoated area using a thickness gage. It can be understood that although the current collector in the coated area will expand in the compaction process, resulting in a slight decrease in the thickness compared to the uncoated area, the decrease can be ignored and will not have a significant impact on the test result. More preferably, in a case that the current collector is an aluminum foil, the density is 2.7 g/cm³.

Those skilled in the art may achieve the regulation of the iron dissolution rate of the positive electrode film layer through any known process. As an example, it is achieved by regulating the surface coating quality of the positive electrode material, and the temperature, time, and pressure in the preparation process. In addition, in the use of the battery, the battery design, the oxidant content in the electrolyte solution, the working temperature of the battery, and the charging and discharging intensity of the battery may also affect the iron dissolution rate of the positive electrode film layer. The iron dissolution rate of the positive electrode film layer mainly comes from the lithium-containing transition metal phosphate positive electrode active material in the positive electrode film layer, which can indirectly reflect the integrity and density of the carbon coating on the surface of the positive electrode active material. The lower the iron dissolution rate, the less likely the iron ions dissolved in acid are to precipitate from the carbon coating material, that is, the more complete and denser the carbon coating material on the surface of the positive electrode active material. The iron dissolution rate falling within the above range indicates that the positive electrode active material has a relatively complete and dense carbon coating material, thus improving the electrical contact between the positive electrode active materials, enhancing the conductivity of the positive electrode active material, reducing the polarization of the positive electrode active material, and further optimizing the kinetic performance of the lithium-ion secondary battery. Moreover, the high-integrity carbon coating material makes the particles easily slip under a stress in the roll pressing process, thus simultaneously improving the compaction density of the electrode plate and the energy density of the battery.

In some embodiments, the iron dissolution rate of the positive electrode film layer ranges from 658 ppm to 1,485 ppm.

The positive electrode material with the iron dissolution rate of the positive electrode film layer falling within the above range has relatively fewer lattice defects and a more complete and denser carbon coating material. Fewer crystal defects help to improve the compressive resistance and slipability of the particles in the positive electrode film layer under high roll pressing pressure. High coating integrity facilitates slip between the particles. Dense coating helps to reduce the space occupancy of the carbon layer, further improve the compaction density of the electrode plate, and achieve a balance between the kinetic performance and energy density of the battery.

In some embodiments, in a coating coverage index B cumulative distribution curve of the positive electrode film layer obtained in a surface scanning mode of a laser microscopic confocal Raman spectrometer, the median B₅₀ of the coating coverage index ranges from 0.35 to 0.48, where the coating coverage index B is I_{P}/I_{D}, where I_{P} represents the intensity of a P-band in a Raman spectrum at 948±100 cm⁻¹, and I_{D} represents the intensity of a D-band in the Raman spectrum at 1,350±100 cm⁻¹.

In the present application, the coating coverage index B value of the positive electrode film layer may be obtained by scanning using the laser microscopic confocal Raman spectrometer. As an example, specifically, a laser microscopic confocal Raman spectrometer (high-precision Renishaw laser microscopic confocal Raman spectrometer) is used, with an excitation wavelength of 532 nm, an appropriate amount of the positive electrode film layer is taken for surface scanning on its surface or the cross section along the thickness direction of the electrode plate, the scanning area is 45 µm×45 µm and divided into 10×10 grids, with grid vertices as testing points and a step size of 5 µm, the total number of scanning points is 100, and B values of different sites and a B value cumulative distribution curve in the surface scanning area are obtained.

The positive electrode film layer in the present application may be a positive electrode film layer freshly prepared or a positive electrode film layer disassembled from a battery. The surface of the positive electrode film layer obtained by disassembling the battery inevitably contains residual electrolyte salt particles. In order to improve the testing accuracy, it is preferred to perform surface scanning on the cross section of the positive electrode film layer along the thickness direction of the electrode plate to characterize the coating coverage index of the positive electrode film layer.

The coating coverage index B value of the positive electrode film layer is obtained through the peak intensity ratio of a P-band (G-band) to a D-band (D-band) in a Raman spectrum; the position of the P-band is 948±100 cm⁻¹, which characterizes a phosphate PO₄³⁻ structure; and the position of the D-band is 1,350±100 cm⁻¹, which characterizes a disordered structure, where disorder indicates that there is no regular arrangement between carbon atoms in the structure. A Raman spectrometer is a surface analysis instrument with a detection depth of 10 nm. Therefore, the carbon structure peak of the positive electrode film layer in the surface scanning mode of the laser microscopic confocal Raman spectrometer shows higher intensity compared to the phosphate structure peak with higher content in a bulk phase.

Those skilled in the art may achieve the regulation of coating coverage index of the active material particles through any known process. As an example, adjusting the coating coverage index of the active material particles can be achieved by regulating the type of the carbon source, the addition amount of the carbon source, the sintering temperature, the sintering time, the sintering pressure, and the sintering atmosphere.

The coating coverage index B value can indirectly reflect the thickness of the carbon coating material on the surfaces of the lithium-containing transition metal phosphate particles. The smaller the thickness of the carbon coating material, the higher the phosphate structural strength detected in the Raman spectrum, and the higher the coating coverage index of the positive electrode film layer.

The coating coverage index B value cumulative distribution curve refers to a curve obtained by arranging at least 100 obtained B values in ascending order, with the coating coverage index as a horizontal axis, and with the cumulative number proportion as a vertical axis. B₅₀ is a B value corresponding to the cumulative number proportion of the vertical axis in the coating coverage index B value cumulative distribution curve being 50%.

In some embodiments, the median B₅₀ of the coating coverage index of the positive electrode film layer is optionally 0.35, 0.36, 0.37, 0.38, 0.39, 0.398, 0.4, 0.41, 0.42, 0.43, 0.432, 0.44, 0.443, 0.445, 0.448, 0.449, 0.45, 0.453, 0.459, 0.46, 0.47, 0.48, or within a numerical range between any two thereof.

In order to reduce the influence of the extreme coating coverage index caused by the non-particle area in the positive electrode film layer on the test result, the median B₅₀ of the coating coverage index is adopted to evaluate the thickness of the carbon coating material on the positive electrode active material. The median B₅₀ of the coating coverage index of the positive electrode film layer being within the above range indicates that the thickness of the carbon coating material on the positive electrode active material is relatively low, thus helping to further reduce the volume occupied by the carbon coating material, further improve the compaction density of the electrode plate, and achieve a balance between the kinetic performance and energy density of the battery.

In some embodiments, the area proportion of particles with a particle size greater than or equal to 5 µm in the cross section of the positive electrode film layer along the thickness direction of the electrode plate is 0.

The area proportion of the particles with a particle size greater than or equal to 5 µm in the cross section of the positive electrode film layer along the thickness direction of the electrode plate may be tested with reference to the method described above. The area of the particles with a particle size greater than or equal to 5 µm in the cross section of the positive electrode film layer along the thickness direction of the electrode plate is divided by the total area of the counted particles to obtain the area proportion of the particles with a particle size greater than or equal to 5 µm in the cross section of the positive electrode film layer along the thickness direction of the electrode plate.

Research has shown that the particles with a particle size greater than or equal to 5 µm in the positive electrode film layer significantly deteriorate the infiltration of the electrolyte solution in the positive electrode film layer and the diffusion in the active material particles. The area proportion of the particles with a particle size greater than or equal to 5 µm being 0 helps to further reduce the internal resistance of the battery and improve the kinetic performance of the battery.

In some embodiments, the area proportion of particles with a particle size greater than or equal to 1.5 µm and less than 5 µm in the cross section of the positive electrode film layer along the thickness direction of the electrode plate ranges from 8.0% to 20.0%, optionally from 10.0% to 20.0%.

In some embodiments, the area proportion of the particles with a particle size greater than or equal to 1.5 µm and less than 5 µm in the cross section of the positive electrode film layer along the thickness direction of the electrode plate is optionally 8.0%, 9.0%, 9.02%, 10.0%, 11.0%, 12.0%, 12.81%, 13.0%, 14.0%, 14.58%, 14.62%, 14.92%, 15.0%, 15.31%, 15.39%, 15.46%, 16.0%, 16.02%, 16.89%, 17.0%, 18.0%, 19.0%, 20.0%, or within a numerical range between any two thereof. The area proportion of the particles with a particle size greater than or equal to 1.5 µm and less than 5 µm in the cross section of the positive electrode film layer along the thickness direction of the electrode plate may be tested with reference to the method described above. The area of the particles with a particle size greater than or equal to 1.5 µm and less than 5 µm in the cross section of the positive electrode film layer along the thickness direction of the electrode plate is divided by the total area of the counted particles to obtain the area proportion of the particles with a particle size greater than or equal to 1.5 µm and less than 5 µm in the cross section of the positive electrode film layer along the thickness direction of the electrode plate.

In the process of improving particle gradation and increasing the area proportion of large particles, it is inevitable to introduce particles with a particle size greater than or equal to 1.5 µm and less than 5 µm. The area proportion of the particles with a particle size greater than or equal to 1.5 µm and less than 5 µm in the cross section of the positive electrode film layer along the thickness direction of the electrode plate being within the above range helps to improve the compaction density of the electrode plate, and simultaneously can further reduce the hindering effect of large-sized particles on the surface of the electrode plate on the infiltration and diffusion of the electrolyte solution in the positive electrode film layer improve the consistency of lithium ion diffusion rate in the positive electrode active material particles, reduce local polarization, and improve the kinetic performance of the battery.

In some embodiments, the area proportion of particles with a particle size greater than or equal to 1 µm and less than 1.5 µm in the cross section of the positive electrode film layer along the thickness direction of the electrode plate ranges from 15.0% to 25.0%, optionally from 16.0% to 24.0%.

In some embodiments, the area proportion of the particles with a particle size greater than or equal to 1 µm and less than 1.5 µm in the cross section of the positive electrode film layer along the thickness direction of the electrode plate is optionally 15.0%, 16.0%, 17.0%, 18.0%, 18.28%, 18.41%, 18.88%, 19.0%, 19.23%, 19.31%, 19.66%, 19.70%, 20.0%, 20.25%, 20.89%, 21.0%, 22.0%, 23.0%, 23.88%, 24.0%, 25.0%, or within a numerical range between any two thereof.

The area proportion of the particles with a particle size greater than or equal to 1 µm and less than 1.5 µm in the cross section of the positive electrode film layer along the thickness direction of the electrode plate may be tested with reference to the method described above. The area of the particles with a particle size greater than or equal to 1 µm and less than 1.5 µm in the cross section of the positive electrode film layer along the thickness direction of the electrode plate is divided by the total area of the counted particles to obtain the area proportion of the particles with a particle size greater than or equal to 1 µm and less than 1.5 µm in the cross section of the positive electrode film layer along the thickness direction of the electrode plate.

The area proportion of the particles with a particle size greater than or equal to 1 µm and less than 1.5 µm in the cross section of the positive electrode film layer along the thickness direction of the electrode plate being within the above range can make large gaps filled during stacking, forming a "support" structure, reduce the void rate between the particles, and help to enhance the contact between the particles and the overall structural strength, thus on the basis of maintaining good kinetic performance of the battery, further improving the compaction density of the electrode plate and improving the energy density of the battery.

In some embodiments, the area proportion of particles with a particle size greater than or equal to 200 nm and less than 1500 nm in the cross section of the positive electrode film layer along the thickness direction of the electrode plate ranges from 73.0% to 80.0%, optionally from 55% to 65%.

In some embodiments, the area proportion of the particles with a particle size greater than or equal to 200 nm and less than 1500 nm in the cross section of the positive electrode film layer along the thickness direction of the electrode plate is optionally 73.0%, 74.0%, 75.0%, 75.07%, 75.10%, 75.24%, 75.42%, 75.45%, 75.67%, 75.83%, 76%, 76.21%, 76.66%, 77.0%, 78.0%, 78.57%, 79.0%, 80.0%, or within a numerical range between any two thereof.

The area proportion of particles with a particle size greater than or equal to 200 nm and less than 1,500 nm in the cross section of the positive electrode film layer along the thickness direction of the electrode plate may be tested with reference to the method described above. The area of the particles with a particle size greater than or equal to 200 nm and less than 1500 nm is divided by the total area of the counted particles to obtain the area proportion of the particles with a particle size greater than or equal to 200 nm and less than 1500 nm in the cross section of the positive electrode film layer along the thickness direction of the electrode plate.

The area proportion of the particles with a particle size greater than or equal to 200 nm and less than 1500 nm in the positive electrode film layer being within the above range can further improve the consistency of lithium ion diffusion rate, enhance the kinetic performance of the lithium-ion secondary battery, increase the utilization rate of the active material, and improve the energy density of the battery.

In some embodiments, in a graphitization degree C value cumulative distribution curve of the positive electrode film layer obtained in a surface scanning mode of a laser microscopic confocal Raman spectrometer, the median C₅₀ of graphitization degree ranges from 0.95 to 1.20, optionally from 0.98 to 1.15, and further optionally from 1.0 to 1.10, where a graphitization degree C value is I_{G}/I_{D}, where I_{G} represents the intensity of a G-band in a Raman spectrum at 1,580±100 cm⁻¹, and I_{D} represents the intensity of a D-band in the Raman spectrum at 1,350±100 cm⁻¹.

In the present application, the graphitization degree C value of the positive electrode film layer may be obtained in the surface scanning mode of the laser microscopic confocal Raman spectrometer. As an example, specifically, a laser microscopic confocal Raman spectrometer (high-precision Renishaw laser microscopic confocal Raman spectrometer) is used, with an excitation wavelength of 532 nm, an appropriate amount of the positive electrode film layer is taken for surface scanning on its surface or cross section along the thickness direction of the electrode plate, the scanning area is 45 µm×45 µm and divided into 10×10 grids, with grid vertices as testing points and a step size of 5 µm, the total number of scanning points is 100, and C values of different sites and a C value cumulative distribution curve in the surface scanning area are obtained.

The positive electrode film layer in the present application may be a positive electrode film layer freshly prepared or a positive electrode film layer disassembled from a battery. The surface of the positive electrode film layer obtained by disassembling the battery inevitably contains residual electrolyte salt particles. In order to improve the testing accuracy, it is preferred to perform surface scanning on the cross section of the positive electrode film layer along the thickness direction of the electrode plate to characterize the graphitization degree of the positive electrode film layer.

The graphitization degree C value of the positive electrode film layer is obtained through the peak intensity ratio of a G-band to a D-band in a Raman spectrum, the position of the G-band is 1,580±100 cm⁻¹, which characterizes a carbon sp² hybrid structure; and the position of the D-band is 1,350±100 cm⁻¹, which characterizes a disordered structure, where disorder indicates that there is no regular arrangement between carbon atoms in the structure. In graphite crystals, carbon atoms in the same layer form covalent bonds through sp² hybridization, and van der Waals force exists between the layers, making it easy for carbon in the graphite structure to slip. Therefore, the C value can characterize the graphitization degree of the positive electrode film layer. It can be understood that the graphitization degree of the positive electrode film layer mainly comes from the carbon material that has undergone graphitization treatment in the positive electrode film layer, that is, the carbon coating material of the positive electrode active material. Although a carbon nanotube conductive agent with rich sp² hybrid structure also has relatively high I_{G}/I_{D}, its addition in the positive electrode film layer shows an extreme value in the Raman surface scan test of the positive electrode film layer due to the low content and small tube diameter, and will not affect the graphitization degree C₅₀ in the positive electrode film layer. Therefore, the graphitization degree of the positive electrode film layer can also be used for characterizing the graphitization degree of the positive electrode active material.

The graphitization degree C value cumulative distribution curve refers to a curve obtained by arranging at least 100 obtained C values in ascending order, using graphitization degree as a horizontal axis, and using cumulative number proportion as a vertical axis. C₅₀ is a C value corresponding to the cumulative number of the vertical axis in the graphitization degree C value cumulative distribution curve being 50%. Compared to point values, the median C₅₀ of graphitization degree can reflect the overall graphitization degree of the particles in the positive electrode film layer, that is, the ease of slip. Compared to the mean, it can reduce the impact of extreme values in the testing process and improve the confidence of the test result.

The higher the graphitization degree of carbon on the surface of the positive electrode active material, the higher the proportion of graphite structured carbon in the positive electrode film layer, and the easier it is for particles to slip through the highly graphitized carbon structure in the coating material, thus achieving an increase in the compaction density of the electrode plate.

Those skilled in the art may achieve the regulation of graphitization degree of the active material particles through any known process. As an example, the adjustment of the graphitization degree of the active material particles may be achieved by regulating the carbon source (which may be a polymer carbon source, such as PEG), sintering temperature, sintering time, sintering pressure, sintering atmosphere, and nucleation process. The higher the graphitization degree of carbon on the surface of the positive electrode active material, the higher the proportion of graphite structured carbon in the positive electrode film layer, and the easier it is for particles to slip through the highly graphitized carbon structure in the coating material, thus achieving an increase in the compaction density of the electrode plate.

In some embodiments, in the graphitization degree C value cumulative distribution curve of the positive electrode film layer obtained in the surface scanning mode of the laser microscopic confocal Raman spectrometer, the median C₅₀ of graphitization degree is optionally 0.95, 0.96, 0.97, 0.98, 0.99, 0.993, 1, 1.005, 1.008, 1.01, 1.012, 1.015, 1.02, 1.021, 1.03, 1.032, 1.04, 1.05, 1.06, 1.07, 1.08, 1.09, 1.1, 1.11, 1.12, 1.13, 1.14, 1.15, 1.16, 1.17, 1.18, 1.19, 1.20, or within a numerical range between any two thereof.

In some embodiments, in a sphericity area cumulative distribution curve of the particles obtained from the cross section of the positive electrode film layer along the thickness direction of the electrode plate, the median L_{A50} of sphericity of the particles ranges from 0.65 to 0.85, optionally from 0.70 to 0.80, where the sphericity L value is a ratio of the area of the particle to the area of a fitted circle.

The specific method for testing the sphericity of the particles in the cross section of the positive electrode film layer along the thickness direction of the electrode plate is as follows: identifying the particles in the cross section of the positive electrode film layer with reference to the method described above in the present application, and analyzing the morphology and area of the particles in the cross section of the positive electrode film layer along the thickness direction of the electrode plate using the "Shape Description" and "Area" analysis functions in ImageJ. According to the software manual (ImageJUserGuideIJ 1.46r), the "Area" parameter obtained through analysis represents the pixel area of the particle, and the "Round" parameter represents the ratio of the pixel area of the particle to the area of the circle with the fitted longest diameter as the diameter.

The closer the particle is to a spherical shape, the closer the ratio of the pixel area to the area of the circle with a diameter equal to the fitted major axis is to 1. Therefore, the "Round" parameter of the particle obtained through analysis is used for characterizing the sphericity of the particle. A sphericity area cumulative distribution curve of the particles in the positive electrode film layer is obtained by arranging the obtained sphericity of at least 5000 particles in ascending order, with the sphericity as a horizontal axis, and with the cumulative area proportion as a vertical axis. L_{A50} is a sphericity L value corresponding to the cumulative area proportion of the vertical axis in the sphericity L value cumulative distribution curve being 50%.

In some embodiments, in the sphericity area cumulative distribution curve of the particles obtained from the cross section of the positive electrode film layer along the thickness direction of the electrode plate, the median L_{A50} of sphericity is optionally 0.65, 0.66, 0.67, 0.68, 0.69, 0.70, 0.705, 0.71, 0.72, 0.73, 0.74, 0.75, 0.76, 0.77, 0.78, 0.79, 0.80, 0.81, 0.82, 0.83, 0.84, 0.85, or within a numerical range between any two thereof.

Those skilled in the art may achieve the regulation of sphericity of the particles through any known process. As an example, the adjustment of sphericity of the particles may be achieved through processes such as grinding, polishing, chemical corrosion, mechanical stirring, extrusion, coating, granulation, and addition of surfactants, and by adjusting the parameters of each process.

The particles with the median L_{A50} of sphericity falling within the above range are approximately spherical. Under an external force, slipping can easily occur between the particles, thus further improving the compaction density of the electrode plate and increasing the energy density of the battery.

In some embodiments, in a roughness area cumulative distribution curve of the particles obtained from the cross section of the positive electrode film layer along the thickness direction of the electrode plate, the median R_{A50} of roughness of the particles ranges from 0.92 to 0.96.

In the roughness area cumulative distribution curve of the particles obtained from the cross section of the positive electrode film layer along the thickness direction of the electrode plate, the specific method for testing the median R_{A50} of roughness is as follows: identifying the particles in the cross section of the positive electrode film layer with reference to the method described above in the present application, and analyzing the morphology of the particles in the cross section of the positive electrode film layer along the thickness direction of the electrode plate using the "Shape Description" analysis functions in ImageJ. According to the software manual (ImageJUserGuideIJ 1.46r), the "Solidity" parameter obtained through analysis represents the ratio of the pixel area of the particle to the convex area. Therefore, the "Solidity" parameter of the particle obtained through analysis is used for characterizing the roughness of the particle. According to the definition, it can be seen that the closer the roughness is to 1, the smoother the particle. A roughness area cumulative distribution curve of the particles in the positive electrode film layer is obtained by arranging the obtained sphericity of at least 5,000 particles in ascending order, with the roughness as a horizontal axis, and with the cumulative area proportion as a vertical axis. R_{A50} is a roughness R value corresponding to the cumulative area proportion of the vertical axis in the roughness R value cumulative distribution curve being 50%.

In some embodiments, in the roughness area cumulative distribution curve of the particles obtained from the cross section of the positive electrode film layer along the thickness direction of the electrode plate, the median R_{A50} of roughness of the particles is optionally 0.92, 0.93, 0.94, 0.95, 0.96, or within a numerical range between any two thereof.

Those skilled in the art may achieve the regulation of roughness of the particles through any known process. As an example, the adjustment of roughness of the particles may be achieved through processes such as grinding, polishing, grinding and cutting, Haoke Energy, electroplating, and calendering, and by adjusting the parameters of each process.

The surfaces of the particles with the median R_{A50} of roughness falling within the above range are relatively smooth, and the friction between the particles is relatively small. Under an external force, slipping can easily occur, thus further improving the compaction density of the electrode plate and increasing the energy density of the battery.

In some embodiments, based on the total mass of the positive electrode active material, the mass content of a carbon element ranges from 0.8% to 1.8%, optionally from 0.9% to 1.5%.

Based on the total mass of the positive electrode active material, the mass proportion of the carbon element may be measured through any known method and device in this field. For example, referring to GB/T21023-2006 "Determination of Total Carbon and Sulfur Content in Steel and Iron - Infrared Absorption Method after Combustion in High-Frequency Induction Furnace", a Dekai HCS infrared carbon and sulfur analyzer is used for measurement.

In some embodiments, based on the total mass of the positive electrode active material, the mass content of the carbon element is optionally 0.8%, 0.9%, 1.0%, 1.1%, 1.2%, 1.3%, 1.4%, 1.5%, 1.6%, 1.7%, 1.8%, or within a numerical range between any two thereof.

The positive electrode active material has a relatively low content of carbon coating compared to lithium-containing phosphate positive electrode active materials in the existing technology, thus further increasing the load of lithium-containing phosphate in the positive electrode plate and improving the energy density of the lithium-ion secondary battery.

In some embodiments, the lithium-iron antisite defect concentration of the positive electrode active material ranges from 0.1% to 1.5%, optionally from 0.3% to 1.0%.

XRD data of the samples are collected using an X-ray diffractometer. Phase analysis is performed on the samples. A CIF file of the phase is obtained from an open source website as an initial model of the crystal structure, including definition unit cell parameters, atom positions, occupancy probabilities, and the like. In the initial model of the crystal structure, considering the possibility of Fe-Li antisite, the possible Li content at the Fe position and the possible Fe content at the Li position are set. An initial value is set to 0.1%. FullProfSuite software is adopted to fit and refine the collected XRD data. The parameters are refined in an order of background parameters, peak intensity, unit cell parameters, and D-band profile. When the fitted D-band profile optimally matches the experimental peak profile with Rwp being less than 10, the refined site occupation probabilities of Li and Fe are obtained, which serve as the lithium-iron antisite defect concentration.

In some embodiments, the lithium-iron antisite defect concentration of the positive electrode active material is optionally 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, or within a numerical range between any two thereof.

Those skilled in the art may achieve the regulation of the lithium-iron antisite defect concentration of the positive electrode active material through any known process. As an example, by regulating the sintering temperature, sintering time, preparation method, raw material ratio and the like, the regulation of the lithium-iron antisite defect concentration of the positive electrode active material can be achieved.

During preparation and cycling, lithium vacancies inevitably form within the crystal structure of the positive electrode active material. The lithium vacancies not only cause the oxidation of ferrous ions to ferric ions, but also induce partial migration of iron ions into lithium sites, forming lithium-iron antisite defects, blocking the one-dimensional diffusion channel for lithium ions, and adversely affecting the solid-phase transport of lithium ions.

The positive electrode active material in this embodiment of the present application has low lithium-iron antisite defects, indirectly confirming the low lattice defect content of the positive electrode active material in this embodiment of the present application, helping to reduce the risk of particle collapse and cracking under high roll pressing pressure, improving the compaction density of the electrode plate, simultaneously achieving uniform transport of lithium ions in the solid phase, and further improving the energy density and kinetic performance of the lithium-ion secondary battery.

In some embodiments, the lithium-containing transition metal phosphate particles include a component represented by the following general formula:

LiₘFeₓP_{y}OⱼQ_{q},

where Q includes one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

In some embodiments, m is optionally 0.8, 0.85, 0.9, 0.95, 0.98, 1.00, 1.03, 1.05, 1.08, 1.10, 1.13, 1.15, or a numerical value within a range formed by any two thereof.

In some embodiments, x is optionally 0.9, 0.91, 0.92, 0.93, 0.94, 0.95, 0.96, 0.97, 0.98, 0.99, 1.0, or a numerical value within a range formed by any two thereof. In some embodiments, y is optionally 0.95, 0.96, 0.97, 0.98, 0.99, 1.00, or a numerical value within a range formed by any two thereof.

In some embodiments, j is optionally 3.5, 3.6, 3.7, 3.8, 3.9, 4, or a numerical value within a range formed by any two thereof.

In some embodiments, q is optionally 0, 0.01, 0.02, 0.03, 0.04, 0.05, 0.06, 0.07, 0.08, 0.09, 0.1, or a numerical value within a range formed by any two thereof. The selection of an appropriate modifying element Q can improve the lattice variation rate of the positive electrode active material during lithium deintercalation and intercalation, reduce the oxygen activity on the surfaces of particles, and enhance the structural stability of the material, thus improving the gram capacity utilization of the material during cycling and further enhancing the cycling stability of the lithium-ion secondary battery.

In some embodiments, the positive electrode active material includes one or more of lithium iron phosphate, and doped modified materials and coated modified materials thereof.

In some embodiments, the positive electrode active material includes a titanium element, and based on the total mass of the positive electrode active material, the mass content of the titanium element ranges from 2000 ppm to 6000 ppm. The types and contents of elements in the positive electrode active material may be tested through any known method in this field. As an example, titanium element and content testing may be performed by adopting inductively coupled plasma emission spectroscopy with reference to Appendix C of GB/T33822-2017.

The doping of the titanium element in the positive electrode active material helps to cause lattice distortion, reduce Li-O bond energy, improve lithium ion transport rate, and improve the kinetic performance of the lithium-ion secondary battery. However, in the existing technology, the doping content of the titanium element in the lithium-containing phosphate often cannot exceed 3000 ppm, because excessive titanium element is difficult to completely enter the lithium-containing phosphate phase, and tends to become harmful impurities remaining on the surface, which has a negative impact on the performance of the battery.

The positive electrode active material in this embodiment of the present application has a high titanium element content. Surprisingly, the high addition amount of the titanium element does not form a harmful impurity phase that negatively impacts the energy density and kinetic performance of the battery. Although the exact reason remains unclear, it is hypothesized that the titanium element may form a fast-ion conductor in combination with phosphate groups and other elements (e.g., lithium), thus enhancing the kinetic performance of the battery on the contrary.

In some embodiments, the powder tap density of the positive electrode active material ranges from 0.70 g/cm³ to 1.50 g/cm³, optionally from 0.7 g/cm³ to 1.20 g/cm³.

The powder tap density may be tested by adopting any known method in this field. As an example, an electronic balance is turned on, a conical flask is first used as a base and placed on the electronic balance, and then the electronic balance is cleared to zero; a tap density measuring cylinder is placed on the conical flask, and weighed, and the weight of the measuring cylinder is recorded; a sample bag is opened, a clean sample spoon was used for first stirring samples in the sample bag 3-5 times for uniform mixing, then the samples are smoothly transferred into the measuring cylinder; the powder on the surface of the communication is wiped off by using dust-free paper, and then it is placed in the conical flask that has been cleared to zero for weighing; the mouth of the measuring cylinder is sealed by using a sealing film, and the tap density measuring cylinder is placed into a matching instrument rubber ring to ensure that the tap density measuring cylinder is tightly adhered to the rubber ring and perpendicular to the surface of the instrument; the vibration frequency is set to 250 times/min and the times of vibration is set to 5,000 on the instrument, a button is pressed for tapping for 20 min; then the tap density measuring cylinder is taken down, a flashlight is used for irradiating the surface of the measuring cylinder, the highest scale V₁ and the lowest scale V₂ are read through visual inspection, and an average value V of the two is taken; the mass m₀ of the measuring cylinder is subtracted from the mass m₁ of the measuring cylinder and the samples to obtain the mass m of the powder, and the tap density of the samples is obtained according to a density formula ρ=m/v.

In some embodiments, the powder tap density of the positive electrode active material is optionally 0.70 g/cm³, 0.80 g/cm³, 0.90 g/cm³, 1.00 g/cm³, 1.10 g/cm³, 1.20 g/cm³, 1.30 g/cm³, 1.40 g/cm³, 1.50 g/cm³, or within a numerical range between any two thereof.

The effective gradation formed independently by the positive electrode active material in this embodiment of the present application is limited, and it has a relatively low powder tap density. With the high integrity and density of the carbon coating material of the positive electrode active material in the positive electrode film layer, it is easy to compress the voids between the particles under the external force to achieve an increase in powder compaction density.

In some embodiments, the powder compaction density of the positive electrode active material under a pressure of 3T ranges from 2.50 g/cm³ to 2.70 g/cm³, optionally from 2.52 g/cm³ to 2.68 g/cm³.

In the present application, the term "powder compaction density" refers to the density of a green compact formed in a compression process through an external force, where the movement and deformation of particles fill larger voids, increase the contact area between the particles, enhance the atomic attraction force, and strengthen the mechanical interlocking effect, in unit of g/cm³.

The powder compaction density of the positive electrode active material may be measured through any known method and device in this field. For example, measurement may be performed by using a compaction density instrument with reference to GB/T24533-2009. Specifically, a certain amount of positive electrode active material is placed on a compaction-dedicated mold (with mold diameter known), with a circular metal piece placed at each of the top and the bottom of a hollow portion in the mold. The positive electrode active material is placed between the circular metal pieces. A metal cylinder is placed at the top. The mold is placed on the compaction density instrument. The bottom area of the mold is 1.327 cm². The pressure is set to 3T. The thickness of the positive electrode active material can be read on the device under the pressure of 3T. The powder compaction density of the positive electrode active material is ρ=m/v, where v=(S*H), m is the mass of the positive electrode active material, S is the bottom area of the mold, and H is the thickness of the compacted positive electrode active material.

In some embodiments, the powder compaction density of the positive electrode active material under the pressure of 3T is optionally 2.50 g/cm³, 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, or within a numerical range between any two thereof.

Although the area proportion of the particles with a particle size greater than or equal to 1.5 µm in the positive electrode film layer is low, due to the low iron dissolution rate of the positive electrode film layer, it indicates that the surface of the positive electrode active material has a high-density and intact carbon coating material, thus still achieving high compaction density under the external force, and providing a material basis for improving the compaction density of the electrode plate and preparing a high-energy-density lithium-ion secondary battery.

In some embodiments, the powder resistivity of the positive electrode active material under a pressure of 8 MPa ranges from 0.5 Ω·cm to 30.0 Ω·cm, optionally from 2.0 Ω·cm to 20.0 Ω·cm.

The powder resistivity of the positive electrode active material may be measured through any known method and device in this field. For example, measurement may be performed by using a powder resistivity instrument (model: ST2722, manufactured by Suzhou Lattice Electronics Co., Ltd.) with reference to GB/T33822-2017. Specifically, a certain amount of positive electrode active material (such as 1 g) is weighed and added to a feeding chamber of the powder resistivity instrument, with a pressure of 8 MPa for testing forward resistivity and reverse resistivity of the positive electrode active material respectively, and an average value of the two is taken as the powder resistivity of the positive electrode active material.

In some embodiments, the powder resistivity of the positive electrode active material at a pressure of 8 MPa is optionally 0.5 Ω·cm, 1 Ω·cm, 2 Ω·cm, 3 Ω·cm, 4 Ω·cm, 5 Ω·cm, 6 Ω·cm, 7 Ω·cm, 8 Ω·cm, 9 Ω·cm, 10 Ω·cm, 15 Ω·cm, 20 Ω·cm, 25 Ω·cm, 30 Ω·cm, or within a numerical value between any two thereof.

The carbon coating material on the surface of the positive electrode active material has high integrity and compactness, thus easily achieving the fast conduction of electrons between the particles with the help of the coating structure, making the positive electrode active material have low powder resistivity, helping to enhance the solid-phase transport of electrons, and further improving the kinetic performance of the battery.

In some embodiments, the discharge gram capacity of the positive electrode active material at a discharge rate of 1 C ranges from 135 mAh/g to 150 mAh/g.

In the present application, the positive electrode active material is assembled to form a button battery, and the electrical performance is tested on a Land battery tester. Within a voltage range from 2.0 V to 3.75 V at 25 ± 5°C, the button battery is charged at a constant current to 3.75 V at 1 C, then paused for 5 min, charged at a constant voltage to a cutoff current of 50 µA, and then discharged at a constant current to 2.0 V at 1 C. The discharge capacity of the positive electrode active material at room temperature and discharge rate of 1 C is obtained by dividing the discharge gram capacity of the button battery by the mass of the positive electrode active material.

The preparation and testing process of the button battery is as follows: mixing 2.0 g of the positive electrode active material, conductive carbon black, and PVDF according to a mass ratio of 0.9:0.05:0.05, then adding an organic solvent NMP (N-methylpyrrolidone), performing full and uniform mixing, then performing coating with a 150 µm doctor blade, performing drying at 100°C for 2 h, performing compaction according to a compaction density of 2.0 g/cm³ to 2.2 g/cm³ to obtain a positive electrode plate, punching it into circular pieces with a diameter of 14 mm by using a punch, then performing weighing, recording the weight, placing the weighed positive electrode plate in a vacuum drying oven (105°C, 1 h to 12 h, -90 kpa) for drying, then placing the dried positive electrode plate in a glove box, performing assembling in an order of negative electrode shell - nickel mesh - lithium plate - separator - positive electrode plate - positive electrode shell to obtain a battery, dropwise adding 65 µL to 87 µL (with a pipette) of electrolyte solution (the electrolyte solution is a mixed solvent of ethylene carbonate (EC) and 1,2-dimethyl carbonate (DMC) in a volume ratio of 1:1, and the electrolyte is LiPF₆), placing the battery, with the negative electrode on the topmost, in a groove of a sealing machine for sealing at a pressure of 650 kg/cm², taking down the button battery with insulated tweezers, putting it in a dust-free bag, removing the glove box, and placing the button battery in a constant-temperature room for 3 h to obtain the button battery for testing.

It can be understood that the discharge gram capacity of the positive electrode active material may also be obtained by disassembling a battery to obtain a positive electrode plate, which is then assembled into a button battery according to the method described above, and then performing testing.

In some embodiments, the discharge gram capacity of the positive electrode active material at a discharge rate of 1 C is optionally 135 mAh/g, 140 mAh/g, 142.4 mAh/g, 145 mAh/g, 150 mAh/g, or within a numerical range between any two thereof.

The positive electrode active material has a high discharge gram capacity at a rate of 1 C, indicating that it has good charge and discharge ability, thus helping to improve the kinetic performance of the battery.

In some embodiments, the discharge capacity ratio η of the positive electrode active material discharged to 3.2 V is ≥ 85%, where η is defined as: at room temperature, a button battery containing the positive electrode active material is charged and discharged twice at a constant current at a rate of 0.1 C within a voltage range from 2.0 V to 3.75 V, and then charged and discharged once via a constant current at a rate of 1 C, and in a charge-discharge test at the rate of 1 C, a capacity value extracted at a discharge voltage of 3.2 V is denoted as C₁, and a capacity value extracted at a discharge voltage of 2.0 V is denoted as C₂, where η=C₁/C₂, where the charging process includes constant-voltage charging, with a constant voltage of 3.75 V and a constant-voltage cutoff current of 50 µA.

In some embodiments, the discharge capacity ratio η of the positive electrode active material discharged to 3.2 V is ≥ 88%.

The η value of the positive electrode active material may be measured through any known method and device in this field. As an example, a button battery is first prepared with reference to the method described above, and then the electrical performance of the prepared button battery is tested at room temperature on a Land battery tester. Specifically, the button battery is charged and discharged twice via a constant current at a rate of 0.1 C in a voltage range from 2.0 V to 3.75 V, charged to the cutoff voltage at a constant current, then charged to a current of 50 µA via a constant voltage, and then charged and discharged once via a constant current at a rate of 1 C. In a charge-discharge test at a rate of 1 C, a capacity value corresponding to discharging from 3.75 V to 3.2 V is denoted as C₁, and a capacity value corresponding to discharging from 3.75 V to 2.0 V is denoted as C₂, where η=C₁/C₂.

In some embodiments, η is optionally 85%, 86%, 87%, 88%, 88.1%, 89%, 90%, 90.1%, 91%, 91.1%, 92%, 92.2%, 93%, 94%, 94.1%, 94.5%, 95%, 95.1%, within a range between any two thereof, or a numerical value within the range.

In some embodiments, the discharge capacity ratio η of the positive electrode active material in a newly prepared lithium-ion secondary battery discharged to 3.2 V is greater than or equal to 88%. After the newly prepared lithium-ion secondary battery is charged and discharged via a constant current at a rate of 0.1 C within a voltage range from 2.0 V to 3.75 V for a period of time, the discharge capacity ratio η of the positive electrode active material discharged to 3.2 V may be maintained to be greater than or equal to 85%.

The discharge capacity ratio of the positive electrode active material discharged to 3.2 V in the lithium-ion secondary battery in this embodiment of the present application being high indicates that the positive electrode active material has good kinetic performance. At the same time, the high η value indicates that the lithium-ion secondary battery containing the positive electrode active material still has high voltage when discharged to a low state of charge (SOC), thus helping to maintain good power performance.

In some embodiments, in a 0.1 C discharge curve of a button battery containing the positive electrode active material, a discharge plateau exists within a voltage range from 2.5 V to 2.9 V.

The discharge plateau usually refers to a region where the voltage remains relatively stable in the battery charging and discharging process. In the battery discharge process, current flows out of the battery, and the voltage of the battery initially decreases, but then enters a relatively stable region where the voltage changes very little. This stable voltage region is called the discharge plateau.

The button battery may be obtained by disassembling the positive electrode plate of the lithium-ion secondary battery and combining it with lithium metal. It may also be prepared by assembling with reference to the method described above. In the present application, the positive electrode active material is assembled to form a button battery, and the electrical performance is tested on a Land battery tester. Within a voltage range from 2.0 V to 3.75 V, the button battery is charged at a constant current to 3.75 V at 0.1 C, then paused for 5 min, charged at a constant voltage to a cutoff current of 50 µA, and then discharged at a constant current to 2.0 V at 0.1 C.

The discharge curve shows that the standard charge-discharge plateau voltage for lithium-containing phosphate is usually between 3.2 V and 3.65 V. The button battery containing the positive electrode active material in this embodiment of the present application exhibits a new charge and discharge plateau in the voltage range from 2.5 V to 2.9 V, which helps to increase the discharge interval of the battery and improve the energy density of the battery. At the same time, this also confirms the hypothesis that the positive electrode active material in this embodiment of the present application contains a fast-ion conductor.

In some embodiments, based on the total mass of the positive electrode film layer, the mass content of a conductive agent ranges from 0 to 1.5%.

In some embodiments, based on the total mass of the positive electrode film layer, the mass content of the conductive agent is optionally 0, 0.1%, 0.2%, 0.3%, 0.4%, 0.5%, 0.6%, 0.7%, 0.8%, 0.9%, 1%, 1.1%, 1.2%, 1.3%, 1.4%, 1.5%, or within a numerical range between any two thereof.

In some embodiments, the conductive agent includes at least one of superconducting carbon, acetylene black, carbon black, Ketjen black, carbon dot, carbon nanotube, graphene, and carbon nanofiber.

The positive electrode active material has a high-density and high integrity carbon coating material, so that the positive electrode active material has good electron conductivity, thus reducing the use of the conductive agent in the positive electrode film layer, and helping to further increase the load of the positive electrode active material and improve the energy density of the lithium-ion secondary battery.

In some embodiments, based on the total mass of the positive electrode film layer, the mass content of the conductive agent is 0.

The positive electrode active material has extremely high electron conductivity, even enabling the potential omission of the conductive agent the positive electrode film layer, thus helping to further increase the load of the positive electrode active material and improve the energy density of the lithium-ion secondary battery.

In some embodiments, the positive electrode film layer further includes a binder, and based on the total mass of the positive electrode film layer, the mass content of the positive electrode active material ranges from 95.5% to 99.5%, optionally from 96.5% to 99.5%; the mass content of the binder ranges from 0.5% to 3.0%.

In some embodiments, the binder includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, based on the total mass of the positive electrode film layer, the mass content of the positive electrode active material is optionally 95.5%, 96%, 96.5%, 97%, 97.5%, 98%, 98.5%, 99%, 99.5%, or within a numerical range between any two thereof.

In some embodiments, based on the total mass of the positive electrode film layer, the mass content of the binder is optionally 0.5%, 1%, 1.5%, 2%, 2.5%, 3%, or within a numerical range between any two thereof.

The mass content of the positive electrode active material and the mass content of the binder falling within the above range can effectively increase the load of the active material in the positive electrode film layer per unit volume, maintain good internal adhesion, reduce the probability of powder loss, expansion and cracking problems, and improve the energy density of the secondary battery while considering the safety performance.

In some embodiments, the single-side areal density of the positive electrode film layer ranges from 300 mg/1540 mm² to 450 mg/1540 mm².

In the present application, the single-side areal density of the positive electrode film layer is a well-known meaning in this field and may be tested through any known method in this field. For example, a single-sided coated and compacted positive electrode plate (if it is a double-sided coated positive electrode plate, the positive electrode film layer on one side may be wiped off first) is taken and punched into small circular pieces with an area of S₁, and weighed, and the weight is denoted as M₁. Then, the positive electrode film layer of the positive electrode plate after weighing is wiped off, the current collector is weighed, and the weight is denoted as M₀. The single-side areal density of the positive electrode film layer is (M₁-M₀)/S₁. To ensure the accuracy of the test result, multiple groups (such as 10 groups) of test samples may be tested and an average value is calculated as the test result.

In some embodiments, the single-side areal density of the positive electrode film layer is optionally 300 mg/1,540 mm², 310 mg/1,540 mm², 320 mg/1,540 mm², 330 mg/1,540 mm², 340 mg/1,540 mm², 350 mg/1,540 mm², 360 mg/1,540 mm², 370 mg/1,540 mm², 380 mg/1,540 mm², 390 mg/1,540 mm², 400 mg/1,540 mm², 410 mg/1,540 mm², 420 mg/1,540 mm², 430 mg/1,540 mm², 440 mg/1,540 mm², 450 mg/1,540 mm², or within a numerical range between any two thereof.

The positive electrode film layer with the areal density falling within the above range can help to improve the energy density of the lithium-ion secondary battery.

In some embodiments, in a fully discharged state of the lithium-ion secondary battery, the compaction density of the positive electrode film layer ranges from 2.51 g/cm³ to 2.73 g/cm³.

In some embodiments, in the fully discharged state of the lithium-ion secondary battery, the compaction density of the positive electrode film layer ranges from 2.55 g/cm³ to 2.70 g/cm³.

In the present application, the fully discharged state refers to a state after the battery is placed in a 25°C oven environment and allowed to stand for 2 h, discharged at a constant current at a rate of 1/3 C to 2.5 V after the temperature of the battery is kept at 25°C, and then discharged at a constant current at a rate of 0.1 C to 2.0 V.

The compaction density of the positive electrode film layer may be tested by adopting any known method in this field. As an example, the battery is placed in a 25°C oven environment, allowed to stand for 2 h, discharged at a constant current at a rate of 1/3 C to 2.5 V after the temperature of the temperature is kept at 25°C, and then discharged at a constant current at a rate of 0.1 C to 2.0 V. The battery is disassembled to obtain a positive electrode plate, the residual electrolyte solution is treated with a dimethyl carbonate solvent, the electrode plate is dried and cut into small circular pieces with an area of S, and the mass W₁, The thickness T₁ of the positive electrode plate is measured by using a micrometer, then the positive electrode film layer of the weighed electrode plate is wiped off, the current collector is weighed, with the weight denoted as W₂, and the thickness T₂ of the current collector is measured by using the micrometer, and the compaction density PD of the positive electrode film layer is (W₁-W₂)/[(T₁-T₂)×S].

In some embodiments, in the fully discharged state of the lithium-ion secondary battery, the compaction density of the positive electrode film layer is optionally 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, or any numerical value therebetween.

In some embodiments, after a compaction process, the compaction density of the positive electrode film layer ranges from 2.63 g/cm³ to 2.85 g/cm³.

In some embodiments, after the compaction process, the compaction density of the positive electrode film layer is optionally 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, 2.74 g/cm³, 2.75 g/cm³, 2.76 g/cm³, 2.77 g/cm³, 2.78 g/cm³ g/cm³, 2.79 g/cm³, 2.80 g/cm³, 2.81 g/cm³, 2.82 g/cm³, 2.83 g/cm³, 2.84 g/cm³, 2.85 g/cm³, or within a numerical range between any two thereof.

In the present application, "compaction" refers to a process of compacting the positive electrode film layer through mechanical pressure in a battery assembling process to improve its density and conductivity.

In some embodiments, after a chemical formation process, the compaction density of the positive electrode film layer ranges from 2.51 g/cm³ to 2.73 g/cm³.

In some embodiments, after the chemical formation process, the compaction density of the positive electrode film layer is optionally 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, or within any numerical range between any two thereof.

In the present application, chemical formation refers to a process of forming a stable solid electrolyte interface (SEI film) and electrode structure through electrochemical reactions in a first charging and discharging process of the battery.

It can be understood that with the rebound of the electrode plate in the cycling process, the compaction density of the positive electrode film layer in the fully discharged state of the lithium-ion secondary battery is slightly lower than the compaction density of the positive electrode film layer after compaction and chemical formation.

The compaction density of the positive electrode film layer being within the above range helps to improve the energy density of the lithium-ion secondary battery.

In some embodiments, the compaction density of the positive electrode film layer ranges from 2.51 g/cm³ to 2.73 g/cm³, and the porosity of the positive electrode film layer in the cross section of the positive electrode film layer along the thickness direction of the electrode plate ranges from 10% to 22%.

In some embodiments, the compaction density of the positive electrode film layer ranges from 2.55 g/cm³ to 2.70 g/cm³, and the porosity of the positive electrode film layer in the cross section of the positive electrode film layer along the thickness direction of the electrode plate ranges from 10% to 20%.

In some embodiments, the porosity of the positive electrode film layer in the cross section of the positive electrode film layer along the thickness direction of the electrode plate is optionally 10%, 11%, 12%, 13%, 14%, 15%, 16%, 17%, 18%, 19%, 20%, 21%, 22%, or within a numerical range between any two thereof.

The porosity of the positive electrode film layer in the cross section of the positive electrode film layer along the thickness direction of the electrode plate may be tested through the following method. The scanning electron microscope image of the cross section of the positive electrode film layer along the thickness direction of the electrode plate obtained according to the method described above is imported into ImageJ software. A line tool is selected to mark a scale length in the image with a line, followed by clicking "AnalyzeSetScale", and setting scale parameters in the software according to the scale length in the image. A rectangle tool is selected to select the part of the image outside the scale area, "ImageDuplicate" is used to duplicate the selected area, and "ImageType8bit" is used to adjust the format of the image. "AnalyzeSetMeasurements" is selected with the following 5 options enabled: "Area", "Meangrayvalue", "AreaFraction", "Limittothreshold", "Feret'sdiameter", where "Decimalplaces" is set to 3. Sequentially selecting "Image" - "Adjust" - "Threshold", 0 and 100 are set in the "Threshold" box to export the pore data in the electron microscope image of the image by using the Analyze-Measure function. A pore image is exported by using "Image" - "Overlay" - "Flatten". "Apply" in "Threshold" is clicked, followed by clicking "Analyze" - "AnalyzeParticles", and checking the four columns on the left to obtain statistical data of pores.

It can be understood that in this embodiment of the present application, the "pores" in the cross section of the positive electrode film layer are identified through image color difference and threshold. The "pores" are not the pore data obtained in a gas displacement test, but are mainly used for characterizing the cross-sectional area between particles in the cross section of the positive electrode film layer. This method is superior to a gas displacement method because the porosity obtained by the gas displacement method is related to the pores between particles and also to the pores in the carbon layer coated on the surfaces of lithium iron phosphate particles, which cannot objectively reflect the pores between particles. The lower the porosity in the cross section of the positive electrode film layer tested by adopting this method, on the one hand, the better the particle gradation of large, medium, and small particles in the positive electrode film layer, and the higher the compaction density. On the other hand, if the porosity is low under the same gradation and roll pressing force, it means that the particles are prone to slip between each other, thus reducing the risk of overpressure and stress concentration in the film layer, further reducing the probability of delamination of the positive electrode film during long cycling, and helping to improve the long-term cycle performance of the battery.

In some embodiments, the positive electrode plate includes a primer layer, and the primer layer is arranged between the positive electrode film layer and the current collector; the primer layer includes carbon-based particles, and the distribution density of the carbon-based particles with a particle size greater than 100 nm in the primer layer is ≤ 10 pcs/10 µm.

The carbon-based particles refer to particles having a carbon element as a main component, including but not limited to conductive carbon, carbon black, and the like.

The primer layer helps to improve the electric conductivity and adhesion between the positive electrode film layer and the current collector, reduce the occurrence of delamination between the positive electrode film layer and the current collector during cycling, and improve the kinetic performance of the battery at the same time. In the high-compaction-density electrode plate in this embodiment of the present application, for example, in a case that the compaction density of the positive electrode plate in the fully discharged state is greater than or equal to 2.4 g/cm³, the current collector is prone to damage in the high-pressure compaction process of the electrode plate, and the large-sized particles are prone to producing pits on the current collector. Controlling the distribution density of the carbon-based particles with a particle size greater than 100 nm in the primer layer to be ≤ 10 pcs/10 µm helps to reduce the probability of current collector damage in the high-compaction-density electrode plate, and further improve the ultimate compaction density of the positive electrode plate.

The distribution density of the carbon-based particles with a particle size greater than 100 nm in the primer layer may be obtained through the method described above by cutting off he positive electrode film layer along the thickness direction of the electrode plate through an argon ion beam, and taking a scanning electron microscopy image or microscopic image, determining the size of carbon particles in the primer layer through a statistical method, counting the number of carbon-based particles with a particle size greater than 100 nm per 10 µm in the primer layer for at least five times, and calculating an average value.

The primer layer in this embodiment of the present application may be obtained through any known preparation process. For example, operations such as screening or centrifugation are performed in advance in the preparation process of carbon-based particles to remove large particles of the carbon-based material, so that D_{V50} of the carbon-based particles added in the preparation process of the primer layer is between 20 nm and 60 nm and D_{V90} is less than or equal to 70 nm, and then the carbon-based material is mixed with a binder, stirred, and coated on a current collector to obtain a primer layer.

In some embodiments, the compaction density of the positive electrode plate in the fully discharged state is greater than or equal to 2.4 g/cm³, and the single-side thickness of the primer layer ranges from 1 µm to 4 µm.

In some embodiments, the compaction density of the positive electrode plate in the fully discharged state is greater than or equal to 2.5 g/cm³, and the single-side thickness of the primer layer ranges from 2 µm to 4 µm.

With the increase of the compaction density of the electrode plate, the compressive effect of the large-particle lithium-containing phosphate material (e.g., with a particle size greater than 1 µm) in the positive electrode film layer on the primer layer becomes more significant. Therefore, stress concentration is prone to occur at large particle sites, and even causes damage to the current collector by passing through the primer layer. Increasing the thickness of the primer layer helps to improve the stress concentration phenomenon in the electrode plate and further increase the ultimate compaction density of the electrode plate.

The single-side thickness of the primer layer may be tested through the following method. According to the method described above, the positive electrode film layer is cut along the thickness direction of the electrode plate through an argon ion beam, a scanning electron microscopy image is taken, the thickness of the single-side primer layer is measured at an interval of 1 m along the length direction of the electrode plate, and an average value after measuring the thickness of the primer layer at 10 points is taken. It needs to be noted that in the measurement process, it is necessary to avoid abnormal points, i.e., the area of the primer layer with a thickness less than 50 nm and a thickness greater than 4 m. These abnormal points are mainly caused by extreme thickness fluctuations in individual areas due to abnormal stress concentration and compression in the compaction process of the electrode plate, and have no statistical significance.

In some embodiments, the thickness of the positive electrode current collector is less than or equal to 17 µm, and optionally ranges from 13 µm to 15 µm.

In some embodiments, the thickness of the positive electrode current collector is 13 µm, 14 µm, 15 µm, 16 µm, 17 µm, or within a numerical range between any two thereof.

In some embodiments, the positive electrode current collector may be a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode plate includes a negative electrode current collector and a negative electrode film layer arranged on at least one side of the negative electrode current collector, where the areal density of the negative electrode film layer on a single side ranges from 140 mg/1,540 mm² to 221 mg/1,540 mm²; and/or the compaction density of the negative electrode film layer ranges from 1.40 g/cm³ to 1.75 g/cm³.

The single-side areal density and compaction density of the negative electrode film layer may be tested through a method similar to the method for the positive electrode film layer described above.

The areal density and compaction density of the negative electrode film layer being within the above range helps to improve the energy density of the lithium-ion secondary battery.

In some embodiments, the negative electrode current collector may be a metal foil or a composite current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer includes a negative electrode active material. The negative electrode active material may be a negative electrode active material that is commonly known in this field and is applied to batteries. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from the group consisting of elemental silicon, silicon oxide, a silicon-carbon composite, a silicon-nitrogen composite, and silicon alloy. The tin-based material may be at least one selected from the group consisting of elemental tin, a tin oxide compound, and tin alloy. However, the present application is not limited to these materials, and other conventional materials used as negative electrode active materials for batteries may also be used. These negative electrode active materials may be used alone, or two or more of them may be used in combination.

In some embodiments, the negative electrode film layer further optionally includes a binder. The binder may be at least one selected from the group consisting of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from the group consisting of superconducting carbon, acetylene black, carbon black, Ketjen black, carbon dot, carbon nanotube, graphene, and carbon nanofiber.

In some embodiments, the negative electrode film layer further optionally includes other adjuvants such as a thickener (for example, sodium carboxymethyl cellulose (CMC-Na)).

In some embodiments, the negative electrode plate may be prepared by adopting the following method: dispersing the above components for preparing the negative electrode plate, for example, the negative electrode active material, the conductive agent, the binder, and any other components, in a solvent (for example, deionized water) to form a negative electrode slurry; and coating the negative electrode slurry on a negative electrode current collector, followed by processes such as drying and compaction, to obtain the negative electrode plate. In some embodiments, the lithium-ion secondary battery includes an electrolyte. The electrolyte plays a role in conducting ions between the positive electrode plate and the negative electrode plate. The type of the electrolyte is not specifically limited in the present application, which may be selected according to the requirements. For example, the electrolyte may be liquid, gelled, or all solid.

In some embodiments, the electrolyte is an electrolyte solution. The electrolyte solution includes an electrolyte salt and a solvent.

In some embodiments, the electrolyte salt may be at least one selected from the group consisting of lithium hexafluorophosphate, lithium tetrafluoroborate, lithium perchlorate, lithium hexafluoroborate, lithium bis(fluorosulfonyl)imide, lithium bis(trifluoromethanesulfonyl)imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. In some embodiments, the electrolyte solution further optionally includes an additive. For example, the additive may include a negative electrode film forming additive and a positive electrode film forming additive, and may further include an additive that can improve particular performance of the battery, for example, an additive that improves the overcharging performance of the battery, an additive that improves high or low temperature performance of the battery, or the like.

In some embodiments, the lithium-ion secondary battery further includes a separator. The type of the separator is not particularly limited in the present application, and any well-known porous separator with good chemical stability and mechanical stability may be selected.

In some embodiments, the material of the separator may be at least one selected from the group consisting of glass fiber, non-woven fabric, polyethylene, polypropylene, and polyvinylidene fluoride. The separator may be a single-layer film or a multilayer composite film, which is not specially limited. In a case that the separator is a multilayer composite film, materials of layers may be the same or different, which is not specially limited.

In some embodiments, the positive electrode plate, the negative electrode plate, and the separator may be made into an electrode assembly through a winding process or a lamination process.

In some embodiments, the lithium-ion secondary battery may include an outer package. The outer package may be used to encapsulate the above electrode assembly and electrolyte.

In some embodiments, the outer package of the lithium-ion secondary battery may be a hard case, such as a hard plastic case, an aluminum case, or a steel case. The outer package of the secondary battery may alternatively be a soft package, such as a pouch-type soft package. The material of the soft package may be plastic, and examples of plastic may include polypropylene, polybutylene terephthalate, polybutylene succinate, and the like.

According to a second aspect, the present application provides a battery apparatus, which includes the lithium-ion secondary battery according to the first aspect of the present application. The battery apparatus includes at least one of a battery module, a battery pack, and an energy storage battery.

According to a third aspect, the present application provides a power consuming apparatus, which includes the lithium-ion secondary battery according to the first aspect of the present application.

According to a fourth aspect, the present application provides a preparation method for a positive electrode active material, which includes: obtaining a mixed raw material including a carbon source, a lithium source, an iron source, and a phosphorus source, where the carbon source includes a polymer carbon source, the mass content of a trivalent iron element in the iron source is less than or equal to 0.08%, and the molar ratio of lithium to iron in the mixed raw material is greater than or equal to 1 and less than or equal to 1.05; performing grinding to obtain a mixed slurry; drying the mixed slurry to obtain precursor powder; and sintering the precursor powder and performing crushing to obtain the positive electrode active material, where the sintering includes a first temperature and a second temperature, and the second temperature for the sintering ranges from 750°C to 800°C.

The preparation method provided in this embodiment of the present application optimizes the quality of carbon coating and improves the particle size distribution and reduces crystal defects in the positive electrode active material by controlling the carbon source, iron source, and sintering parameters, providing a material basis for the preparation of the positive electrode film layer.

In some embodiments, the iron source includes divalent iron, which is optionally one or more of ferrous oxalate, ferrous carbonate, and ferrous nitrate.

In the sintering process, the divalent iron source will be preferentially decomposed to generate a large amount of ferrous oxide, which serves as a nucleation site to form nanocrystalline nuclei of the lithium-containing transition metal phosphate. At the same time, the polymer carbon source has relatively low decomposition temperature, and the iron element located on the surface of the nanocrystalline nucleus will further catalyze the decomposition of the carbon source, so that the carbon coating material on the surface of the positive electrode active material has a relatively high graphitization degree at lower sintering temperatures, thus reducing the resistivity of the positive electrode active material and improving the density and uniformity of the carbon coating material on the surface of the lithium-containing transition metal phosphate. In addition, the uniform deposition of carbon on the surface of the lithium-containing transition metal phosphate will further hinder the growth of lithium-containing transition metal phosphate grains and reduce the probability that the positive electrode active material particles grow into large particles with a particle size greater than 1.5 µm.

In some embodiments, the particle size D₁₀ of ferrous oxalate is greater than or equal to 3 µm, the particle size D₅₀ ranges from 50 µm to 80 µm, and the particle size D₉₀ is less than or equal to 150 µm.

In the present application, the terms "D₁₀", "D₅₀", and "D₉₀" respectively correspond to the particle sizes corresponding to the cumulative particle size distribution percentages of 10%, 50%, and 90% of the sample obtained by adopting the Malvern laser scattering method.

Controlling the particle size D₁₀ of ferrous oxalate to be greater than or equal to 3 µm can reduce the proportion of small-sized ferrous oxalate particles and control their reactivity in the grinding process. Controlling the particle sizes D₅₀ and D₉₀ of ferrous oxalate helps to achieve uniform mixing between raw materials in the grinding process, thus obtaining a mixed slurry with consistent components and uniform particle size, and improving the particle size consistency of the prepared lithium-containing transition metal phosphate.

In some embodiments, the mass content of a trivalent iron element is less than or equal to 0.08%. In some embodiments, the mass content of the trivalent iron element is optionally 0.01%, 0.02%, 0.03%, 0.04%, 0.05%, 0.06%, 0.07%, 0.08%, or within a numerical range between any two thereof.

Controlling the mass content of the trivalent iron element helps to improve the uniformity and consistency of the carbon coating material. Excessive content of the trivalent iron element will preferentially consume the carbon source, resulting in poor consistency in the quality and thickness of the carbon layer coated between particles. On the one hand, the carbon coating material with a non-uniform thickness will affect the compaction between particles. On the other hand, local carbon depletion will affect the overlap of the conductive network between particles, which is not conducive to the effective improvement of the compaction density of the electrode plate and the improvement of the kinetic performance.

In some embodiments, the lithium source includes one or more of lithium dihydrogen phosphate, lithium phosphate, lithium carbonate, and lithium acetate.

In some embodiments, the carbon source includes a polymer carbon source, and is optionally one or more of polyethylene glycol and polyvinyl alcohol.

In some embodiments, based on the total mass of the mixed raw material, the mass content of carbon source ranges from 1% to 4%.

The polymer carbon source has relatively low decomposition temperature and graphitization temperature, so that the carbon coating material on the surface of the positive electrode active material can be decomposed to form a carbon layer at lower sintering temperatures, thus hindering the growth and sintering of lithium-containing transition metal phosphate grains, and helping to reduce the particle size of the positive electrode active material.

At the same time, the polymer carbon source usually has high molecular weight or long molecular chains, which can easily form stable skeleton structures through crosslinking or orientation during heat treatment. This orderliness is preserved during high-temperature carbonization, which is conducive to the directional growth of graphite crystals. At the same time, the entanglement and crosslinking between long chains help to reduce the structural defects and reduce lattice disorder caused by chain breakage during carbonization, thus improving the graphitization degree.

Organic molecules in the carbon source are decomposed at high temperatures, releasing carbon atoms that can cover and fill small voids or defects on the surface of the active material, thus reducing the surface roughness. The coating material formed by the polymer carbon source has a high graphitization degree and a compact carbon structure, thus helping to optimize the surface roughness of the positive electrode active material.

In some embodiments, the weight average molecular weight of the polyethylene glycol is equal to or less than 10,000.

By using polyethylene glycol with a weight average molecular weight of less than 10,000, the carbon chains are short and it is easy to control the decomposition rate during sintering, so as to form a carbon coating material with appropriate thickness and uniformity.

In some embodiments, the water content of polyethylene glycol is less than or equal to 0.5%.

If the water content of polyethylene glycol is high, water may affect the decomposition process, causing incomplete decomposition or uneven decomposition rate during sintering. Excessive water may further cause uneven distribution of molten polyethylene glycol during sintering, affecting the uniformity of the carbon layer and leading to instability or falling of the carbon coating material.

In some embodiments, the water content of polyethylene glycol is optionally 0, 0.1%, 0.2%, 0.3%, 0.4%, 0.5%, or within a numerical range between any two thereof.

In some embodiments, the pH of polyethylene glycol ranges from 5 to 7.

Polyethylene glycol with a pH from 5 to 7 has high stability and will not degrade during the mixing process due to excessive acidity, especially under high temperature conditions, which may cause rapid decomposition and affect the quality of the coating. If polyethylene glycol is alkaline, it may affect the stability of other components, leading to dissolution or oxidation reactions of metal ions and affecting the performance of the final positive electrode active material.

In some embodiments, the phosphorus source includes one or more of lithium dihydrogen phosphate, phosphoric acid, and ammonium dihydrogen phosphate.

In some embodiments, the lithium source and the phosphorus source may be the same substance.

In some embodiments, the iron source includes ferrous oxalate, the lithium source and the phosphorus source include lithium dihydrogen phosphate, and the carbon source includes polyethylene glycol.

In some embodiments, the atomic molar ratio of the lithium element to the iron element in the lithium source and the iron source ranges from 1.00 to 1.05.

In some embodiments, the atomic molar ratio of the lithium element to the iron element in the lithium source and the iron source is optionally 1.00, 1.01, 1.02, 1.03, 1.04, 1.05, or within a numerical range between any two thereof.

When the atomic molar ratio of the lithium element to the iron element is 1, it is an ideal stoichiometric ratio, thus maintaining the best electrochemical performance, optimizing the reversible deintercalation ability of lithium ions in the charging and discharging processes, achieving good crystal structure stability to improve the cycle life, and reducing the occurrence probability of the impurity phase. However, during actual generation, to compensate for lithium loss during sintering, the molar ratio of the lithium element to the iron element needs to be adjusted to be slightly higher than 1.

In some embodiments, the slurry further includes a titanium source. Optionally, the titanium source includes one or more of titanium dioxide, tetrabutyl titanate, titanium nitrate, and titanic acid.

The titanium source often has low surface activity. Including the titanium source in the slurry can reduce the activity of the lithium-containing transition metal phosphate precursor, inhibit the particle growth of lithium-containing transition metal phosphate during high-temperature sintering, and enable the formation of small particles of lithium-containing transition metal phosphate during sintering.

As a lattice stabilizer, the titanium element usually enters the lattice of lithium-containing transition metal phosphate in the form of Ti⁴⁺. Some titanium ions may replace the positions of iron ions, making the crystal structure more stable and reducing the possibility of antisite of lithium and iron ions, especially during high-temperature or high-current charging and discharging.

At the same time, the doping of titanium helps to improve the sphericity of particles, reduce the roughness of particles, and enhance the overall structural stability of the material.

In some embodiments, lithium dihydrogen phosphate, ferrous oxalate, polyethylene glycol, and titanium dioxide are uniformly mixed in an organic solvent and ground to obtain a mixed raw material.

The organic solvent can effectively reduce the occurrence of side reactions and improve the purity and consistency of the material. Moreover, the organic solvent has good volatility, can be easily removed in the subsequent drying process, and will not remain inside the material, thus avoiding the formation of air holes in the material which would otherwise affect the density and structural stability of the material.

In some embodiments, obtaining the mixed slurry after grinding includes at least two ball milling-demagnetization cycles. The ball milling and the demagnetization each independently satisfy one or more of the following conditions:
(1) grinding balls for the ball milling are one or more of zirconia balls, silicon nitride zirconia balls, and ceramic zirconia balls;
(2) the diameter of the grinding balls for initial ball milling ranges from 5 mm to 6 mm, and the diameter of the grinding balls for secondary ball milling ranges from 0.5 mm to 0.7 mm;
(3) the rotating speed for initial ball milling ranges from 1,400 rpm to 1,600 rpm, and the rotating speed for secondary ball milling ranges from 400 rpm to 600 rpm;
(4) the time of initial ball milling ranges from 150 min to 200 min, and the time of secondary ball milling ranges from 140 min to 180 min;
(5) the demagnetization method is permanent magnet iron removal;
(6) the demagnetization intensity for demagnetization is greater than or equal to 8,000 GS.

By performing combination of ball milling and demagnetization at least twice, large particle materials can be quickly processed and further refined in a short period of time. In this way, it can effectively avoid uneven particle size during ball milling, reduce agglomeration between particles, improve the conductivity and cycling stability of the battery, and also improve the overall production efficiency while ensuring the performance of the final product.

In some embodiments, the volume distribution particle size Dᵥ₅₀ of the particles in the mixed slurry ranges from 1.0 µm to 4.0 µm.

In the present application, the term "D_{V50}" refers to the particle sizes corresponding to the volume cumulative particle size distribution percentage of 50% of the sample obtained by adopting the Malvern laser scattering method.

In some embodiments, the volume distribution particle size D_{V50} of the particles in the mixed slurry is optionally 1 µm, 1.5 µm, 2 µm, 2.5 µm, 3 µm, 3.5 µm, 4.0 µm, or within a numerical range between any two thereof.

The volume distribution particle size D_{V50} of the particles in the mixed slurry being within the above range, on the one hand, can increase the activity of the particles to a certain extent, generate partial positive electrode active material particles with a particle size from 1 µm to 1.5 µm at the same temperature, and improve the compaction density of the electrode plate and the energy density of the battery; and on the one hand, can improve the catalytic decomposition efficiency of the iron element on the surfaces of crystal nuclei towards the carbon source, improve the coating quality of the carbon source, improve the coating uniformity and graphitization degree of the carbon material, and further improve the compaction density of the electrode plate and the energy density of the battery.

In some embodiments, the precursor powder obtained after drying the mixed slurry includes precursor powder obtained after spray-drying the mixed slurry.

In some embodiments, the sintering the precursor powder to obtain the positive electrode active material includes at least two times of sintering.

In some embodiments, the first sintering of the at least two times of sintering satisfies one or more of the following conditions:
(1) the heating rate is greater than or equal to 2°C/min;
(2) the holding temperature ranges from 300°C to 400°C;
(3) the holding time ranges from 2 h to 6 h.

In some embodiments, the second sintering of the at least two times of sintering satisfies one or more of the following conditions:
(1) the heating rate is greater than or equal to 3°C/min;
(2) the holding temperature ranges from 750°C to 800°C;
(3) the holding time ranges from 8 h to 15 h.

Adopting a high heating rate to quickly raise the temperature to the target temperature is beneficial for the uniform growth of particles and reduces the presence of particles with a particle size greater than or equal to 1.5 µm.

By controlling the sintering temperature in the first and second sintering processes, the speed of sintering diffusion can be controlled. At high temperatures, diffusion on the surfaces of the particles increases, defects in the particles are repaired, and the lattice is rearranged. Through recrystallization, the defects on the surfaces of the particles are eliminated, the grain structure of the particles becomes more ordered, the size of the particles gradually increases, and it helps to smoothen the surfaces of the particles and promote the development of the particles towards a spherical shape. The sintering temperature also affects the graphitization rate of the carbon source. In terms of kinetics, carbon atoms gain more energy and can overcome the original energy barrier, causing them to undergo more intense rearrangement in the lattice. However, the sintering time affects the degree of reaction. If the sintering time is too short, the diffusion and rearrangement of the lithium-containing transition metal phosphate and the carbon source are not fully completed. If the sintering time is too long, the particles will grow abnormally, the grains inside the particles will coarsen, the material structure will become unstable, the adhesion between particles will increase, and agglomeration will occur.

In some embodiments, after sintering the precursor, jet milling is performed on the product to obtain the positive electrode active material.

In some embodiments, the classification frequency of the jet milling ranges from 18 Hz to 24 Hz, and the crushing pressure ranges from 0.45 MPa to 0.65 MPa.

The classification frequency in the jet milling refers to the working frequency of a classification apparatus in the jet milling, which is usually related to the classification efficiency and particle size distribution of the particles. A higher classification frequency will screen the particles in the airflow more times, making larger particles screened out and smaller particles remained. Moreover, a higher classification frequency may increase particle collision frequency, causing irregular particles to undergo further impact that can smoothen the particle surfaces and promote spherical morphology formation.

High pressure will cause particles to experience a greater impact force and collide more fiercely. This causes strong impact and wear on the surface of particles, which can crush large particles into small particles, making the collisions between particles fiercer. Therefore, it easy to trim the surface, improving the sphericity and surface smoothness of particles.

However, excessively high classification frequency and crushing pressure will disperse the agglomerated particles into primary particles, followed by further crack and break, affecting the predetermined particle size distribution, and compromising the integrity of the carbon coating material. This manifests as an increase in iron dissolution, causing a negative impact on particle slipping during roll pressing, and increasing the contact and reaction between the lithium-containing transition metal phosphate and external factors such as the electrolyte solution, which is not conducive to the cycle performance and life of the battery. Therefore, it is necessary to control the classification frequency of the jet milling and the crushing pressure within an appropriate range.

According to a fifth aspect, the present application provides a preparation for a positive electrode plate, which includes: sequentially adding a binder, a conductive agent, and the positive electrode active material prepared by adopting the preparation method according to the fourth aspect, performing dry mixing, then adding a solvent, and performing stirring and viscosity adjustment to obtain a finished slurry; and transfer-coating the finished slurry to at least one side of a current collector, and preforming drying and hot-pressing to obtain the positive electrode film layer.

In some embodiments, the stirring includes pre-stirring and main stirring, the revolution speed for the main stirring ranges from 20 rpm to 30 rpm, and the rotation speed ranges from 1,450 rpm to 1,550 rpm.

In some embodiments, the hot-pressing includes at least three times of hot roll pressing, the hot roll pressing force increases sequentially, and the hot roll pressing force respectively ranges from 20 tons to 50 tons, from 50 tons to 70 tons, and from 70 tons to 90 tons; and the hot roll temperature ranges from 40°C to 80°C, the electrode plate is heated before entering hot roll compaction for a first time, and the temperature for the heating ranges from 40°C to 50°C.

In this embodiment of the present application, the positive electrode active material prepared by adopting the above hot-pressing process combined with the preparation method according to the fourth aspect helps to further reduce the cross-sectional porosity of the positive electrode film layer, improve the ultimate compaction density of the electrode plate, and improve the energy density of the battery.

In addition, the present application further provides a power consuming apparatus, which includes at least one of the secondary battery, the battery module, or the battery pack provided in the present application. The secondary battery, the battery module, or the battery pack may be used as a power source of the power consuming apparatus, and may also be used as an energy storage unit of the power consuming apparatus. The power consuming apparatus may include, but not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

The secondary battery, the battery module, or the battery pack may be selected according to the use requirements of the power consuming apparatus.

FIG. 7 shows a power consuming apparatus as an example. The power consuming apparatus is an all-electric vehicle, a hybrid electric vehicle, or a plug-in hybrid electric vehicle. To meet the requirements of the power consuming apparatus for high power and high energy density of secondary batteries, a battery pack or a battery module may be adopted.

As another example, the apparatus may be a mobile phone, a tablet computer, a laptop, or the like. The apparatus is generally required to be light and thin, and may use a secondary battery as a power source.

### Examples

Examples of the present application will be described below. The examples described below are exemplary and only intended to explain the present application, and cannot be construed as limitations on the present application. If the specific technologies or conditions are not specified in the examples, the technologies or conditions described in the literature in the art or the product manual shall be followed. The used reagents or instruments without manufacturers indicated are all conventional products that may be purchased in the market.

### Example 1

### (1) Preparation of positive electrode active material

Lithium dihydrogen phosphate, ferrous oxalate, polyethylene glycol, and titanium dioxide were uniformly mixed in methanol and ground to obtain a mixed raw material. The ratio of lithium dihydrogen phosphate to ferrous oxalate was controlled to achieve the atomic molar ratio of lithium to iron of 1.03; and the particle size D₉₀ of ferrous oxalate was 100 nm, and the mass content of the trivalent iron element was 0.03%.

The mixed raw material was ball-milled multiple times in a ball mill and demagnetized to obtain a mixed slurry.

The mixed slurry was spray-dried to obtain dried precursor powder. The dried precursor powder was light yellow and uniform in color.

The precursor powder was placed in a sintering furnace and heated under a nitrogen atmosphere at 2°C/min from 25°C to a first temperature of 350°C, and the temperature was held for 3 h. Then, the temperature was increased to a second temperature of 770°C at 5°C/min and the temperature was held for 10 h. Then, the temperature was decreased for cooling.

The obtained material was crushed by adopting a jet milling method at a classification frequency of 22 Hz and a crushing pressure of 0.55 MPa to obtain a carbon-coated lithium iron phosphate positive electrode active material. The mass content of a carbon element in the obtained positive electrode active material was 1.144%, the lithium-iron antisite defect concentration was 0.58%, the powder tap density was 1.05 g/cm³, the powder compaction density at a pressure of 3T was 2.57 g/cm³, and the powder resistivity at 8 MPa was 6.0 Ω·cm. The discharge gram capacity at a discharge rate of 1 C was 142.4 mAh/g. A discharge plateau existed within a voltage range from 2.5 V to 2.9 V. The discharge capacity ratio of the discharge plateau at 3.2 V was 91.1%.

### (2) Preparation of positive electrode plate

2.2 wt% PVDF, 0.8 wt% conductive carbon black, and 97.0 wt% positive electrode active material were sequentially added. Dry mixing was performed. Then, N-methylpyrrolidone was added. Stirring and viscosity adjustment were performed to obtain a finished slurry. The finished slurry was transfer-coated onto a primer layer of a current collector aluminum foil. The primer layer included carbon black and PVDF at a ratio of 1:1. The distribution density of carbon-based particles with a particle size greater than 100 nm in the primer layer was less than or equal to 10 pcs/10 µm. The thickness of the primer layer was 2 µm. After drying and hot-pressing, a positive electrode film layer with a single-side areal density of 350 mg/1540 cm² was obtained. The stirring included pre-stirring and main stirring, the revolution speed for the main stirring was 25 rpm, and the rotation speed was 1500 rpm.

The hot-pressing included three times of hot roll pressing process, the hot roll pressing force increased sequentially, and the hot roll pressing force was respectively 35 tons, 55 tons, and 75 tons; the hot roll temperature was 65°C, the electrode plate was heated before entering hot roll compaction for a first time, and the temperature for the heating was 50°C.

The compaction density of the electrode plate was the ultimate compaction density of the electrode plate, and the testing method for the ultimate compaction density of the electrode plate will be described below. The ultimate compaction density of the electrode plate in this example was 2.67 g/cm³.

The statistical results of the cross section of the obtained positive electrode film layer along the thickness direction of the electrode plate showed that the area proportion of the particles with a particle size greater than or equal to 1.5 µm and less than 5 µm in the cross section of the positive electrode film layer was 14.58%; the area proportion of the particles with a particle size greater than 5 µm was 0; the area proportion of the particles with a particle size greater than or equal to 1 µm and less than 1.5 µm was 19.70%; and the area proportion of particles with a particle greater than or equal to 200 nm and less than 1500 nm was 75.07%.

The median B₅₀ of the coating coverage index of the positive electrode film layer obtained in the surface scanning mode of the laser microscopic confocal Raman spectrometer was 0.443. The median C₅₀ of the graphitization degree obtained in the surface scanning mode of the laser microscopic confocal Raman spectrometer was 1.021. In a sphericity area cumulative distribution curve of the particles obtained from the cross section of the positive electrode film layer along the thickness direction of the electrode plate, the median L₅₀ of sphericity was 0.722. In a roughness area cumulative distribution curve of the particles obtained from the cross section of the positive electrode film layer along the thickness direction of the electrode plate, the median R₅₀ of roughness was 0.943. The iron dissolution rate of the positive electrode film layer was 1,058 ppm.

### (3) Preparation of negative electrode plate

95.5 wt% of negative electrode active material (artificial graphite), 1.0 wt% of conductive agent (conductive carbon black), 2.0 wt% of binder (styrene butadiene rubber (SBR)), and 1.5 wt% of thickener (carboxymethyl cellulose sodium (CMC)) were mixed. Deionized water was added and stirring was performed for dispersion to obtain a negative electrode slurry. Then, the negative electrode slurry was coated on two sides of a Cu foil. After the two sides were coated, drying, compaction, cutting and plate preparation were performed to obtain a negative electrode plate. The single-side areal density of the coating was 165 mg/1,540 mm², and the compaction density was 1.60 g/cm³.

### (4) Preparation of separator

A polypropylene film was used as a separator.

### (5) Preparation of electrolyte solution

In an argon atmosphere glove box (H₂O<0.1 ppm, O₂<0.1 ppm), an organic solvent ethylene carbonate (EC)/methyl ethyl carbonate (DMC) was mixed uniformly according to a volume ratio of 1:1, lithium salt LiPF₆ was dissolved in the organic solvent, the content of LiPF₆ in the solution was 1 mol/L, and uniform stirring was performed to an electrolyte solution.

### (6) Preparation of battery

The positive electrode plate, the separator, and the negative electrode plate were stacked sequentially. The separator was required to separate the positive and negative electrodes. Winding was performed to obtain a bare battery cell. The bare battery cell was placed in an outer packaging. The electrolyte solution was injected. Processes such as encapsulation, chemical conversion and exhausting were performed to finally obtain a lithium-ion battery.

The preparation method in Example 2 was basically the same as that in Example 1, except that in the preparation step of the positive electrode active material, the ratio of lithium dihydrogen phosphate to ferrous oxalate was controlled to achieve the atomic molar ratio of lithium to iron of 1.02.

The preparation method in Example 3 was basically the same as that in Example 1, except that in the preparation step of the positive electrode active material, the ratio of lithium dihydrogen phosphate to ferrous oxalate was controlled to achieve the atomic molar ratio of lithium to iron of 1.01.

The preparation method in Example 4 was basically the same as that in Example 1, except that in the preparation step of the positive electrode active material, the ratio of lithium dihydrogen phosphate to ferrous oxalate was controlled to achieve the atomic molar ratio of lithium to iron of 1.05.

The preparation method in Example 5 was basically the same as that in Example 1, except that in the preparation step of the positive electrode active material, the mass content of the trivalent iron element in ferrous oxalate was 0.80%.

The preparation method in Example 6 was basically the same as that in Example 1, except that in the preparation step of the positive electrode active material, the carbon source was changed to be polyethylene glycol + glucose, where the mass ratio of polyethylene glycol to glucose was 3:1.

The preparation method in Example 7 was basically the same as that in Example 1, except that in the preparation step of the positive electrode active material, the carbon source was changed to be polyethylene glycol + glucose, where the mass ratio of polyethylene glycol to glucose was 2:1.

The preparation method in Example 8 was basically the same as that in Example 1, except that in the preparation step of the positive electrode active material, the carbon source was changed to be polyethylene glycol + glucose, where the mass ratio of polyethylene glycol to glucose is 1:2.

The preparation method in Example 9 was basically the same as that in Example 1, except that in the preparation step of the positive electrode active material, the carbon source was changed to be polyethylene glycol + glucose, where the mass ratio of polyethylene glycol to glucose is 1:3.

The preparation method in Example 10 was basically the same as that in Example 1, except that in the preparation step of the positive electrode plate, no conductive carbon black was added.

The preparation method in Example 11 was basically the same as that in Example 1, except that in the preparation step of the positive electrode active material, the second temperature was 755°C.

The preparation method in Example 12 was basically the same as that in Example 1, except that in the preparation step of the positive electrode active material, the carbon source was changed to be polyethylene glycol + glucose, where the mass ratio of polyethylene glycol to glucose is 1:3; the ratio of lithium dihydrogen phosphate to ferrous oxalate was controlled to achieve the atomic molar ratio of lithium to iron of 1.05.

The preparation method in Comparative Example 1 was basically the same as that in Example 1, except that in the preparation step of the positive electrode active material, the carbon source polyethylene glycol was changed to be glucose; the ratio of lithium dihydrogen phosphate to ferrous oxalate was controlled to achieve the atomic molar ratio of lithium to iron of 1.05; and the second temperature was 810°C.

The preparation method in Comparative Example 2 was basically the same as that in Example 1, except that in the preparation step of the positive electrode active material, the ratio of lithium dihydrogen phosphate to ferrous oxalate was controlled to achieve the atomic molar ratio of lithium to iron of 1.01; and the second temperature was 745°C.

The preparation method in Comparative Example 3 was basically the same as that in Example 1, except that in the preparation step of the positive electrode active material, the carbon source polyethylene glycol was changed to be glucose; the ratio of lithium dihydrogen phosphate to ferrous oxalate was controlled to achieve the molar ratio of lithium to iron of 1.06; and the second temperature was 740°C.

### Performance testing

### 1. Ultimate compaction density of electrode plate

A double-sided coated electrode plate was compacted with a roll press. The elongation of the electrode plate after compaction was tested. At the same time, the flexibility of the electrode plate after compaction was evaluated. By increasing the pressure of the roll press, electrode plates with different compaction densities would be obtained. As the pressure increased, the compaction density of the electrode plates increased, the elongation of the electrode plates increased, and the flexibility of the electrode plates decreased. Excessively high elongation of the electrode plate could easily cause warping of the electrode plate, while excessively low flexibility of the electrode plate could lead to brittle fracture of the electrode plate. Therefore, the ultimate compaction density of the electrode plate was defined as the lower one between the compaction density corresponding to 8% elongation of the electrode sheet and the compaction density corresponding to 3 flexible folding cycles of the electrode sheet.

The compaction density was calculated by dividing the mass of the positive electrode film layer by the volume of the positive electrode film layer. The testing method for the elongation was as follows:

The electrode plate was laid flat on a horizontal desktop and cut into sections. Each section of electrode plate was approximately 100 cm in length. An edge substrate copper foil of the electrode plate was removed while ensuring that the cutting edge of the electrode plate was parallel to the MD direction of the electrode plate (perpendicular to the direction of the pressing roll), and the electrode plate was completely covered by the coating layer. A steel ruler was used for measuring the length between marked points at same width positions in the length direction from the head to the tail of the electrode plate (estimated to 0.1 mm). The length before compaction was recorded. After compaction was performed, the length after compaction between the corresponding marked points was recorded. (Length after compaction - length before compaction)/length before compaction was used as the elongation of the electrode plate.

### The testing method for the flexible folding cycles was as follows:

The positive electrode plate was cut into test samples with a size of 20×100 mm². After folded in a forward direction, each of samples was rolled flat with a 2 kg pressing roll and unfolded, followed by checking against light to determine whether light transmission occurred in a gap. If no light transmission occurred, each sample was folded in a reverse direction and rolled flat with the 2 kg pressing roll, followed by checking against light again. This process was repeated until light transmission occurred in the gap. The times of folding was recorded. The test was repeated three times. An average value was calculated as the reference data for the flexibility of the electrode plate.

### 2. Energy density testing

The lithium-ion secondary battery was allowed to stand at 25°C for 2 h to ensure that the temperature of the lithium-ion secondary battery was 25°C. The lithium-ion secondary battery was charged to a charge cutoff voltage of 3.65 V at 0.33 C at 25°C. Constant-voltage charging was performed at this cutoff voltage until the current reached 0.05 C, at which the charging was stopped (where C represented the rated capacity of the lithium-ion secondary battery). After the lithium-ion secondary battery was allowed to stand at 25°C for 1 h, the lithium-ion secondary battery was discharged at 0.33 C at 25°C until a discharge cutoff voltage was 2.5 V. The total discharge energy of the lithium-ion secondary battery was denoted as E₀.

The length, width, and height of the lithium-ion secondary battery were measured. The volume V₀=length×width×height of the lithium-ion secondary battery was calculated.

The volume energy density of the lithium-ion secondary battery = the discharge energy E₀ of the lithium-ion secondary battery/the volume V₀ of the lithium-ion secondary battery.

### 3. DCR testing method

At 25°C, the battery was charged via a constant current at 0.33 C to 3.65 V, then charged via a constant voltage to 0.05 C, then discharged at 1/3 C to 20% SOC, allowed to stand for 5 min, discharged at a pulse current at 3 C for 30 s, allowed to stand for 40 s, then charged at 3 C for 40 s, allowed to stand for 5 min, then charged at a constant current at 1/3 C to 3.65 V, charged at a constant voltage to 0.05 C, then discharged at 1/3 C to 10% SOC, allowed to stand for 5 min, then discharged at a pulse current at 3 C for 30 s, allowed to stand for 40 s, then charged at 3 C for 40 s, allowed to stand for 5 min, then fully charged at 1/3 C, then discharged at 1/3 C to 50% SOC, and then allowed to stand at -25°C for 2 h, discharged at a pulse current at 1 C for 30 s. allowed to stand for 10 min, then allowed to stand at 25°C for 2 h, charged at a constant current at 1/3 C to 3.65 V, then charged at a constant voltage to 0.05 C, and discharged at 1/3 C to 20% SOC, then allowed to stand at -25°C for 2 h, then discharged at a pulse current at 1 C for 30 s, and allowed to stand for 10 min.

The voltages before and after each pulse discharging were recorded. DCRs under different conditions were calculated according to a formula DCR = (voltage before pulse discharging after standing - voltage before standing after pulse discharging)/pulse current.

### Experimental parameters and test results

According to the above method, batteries in each example and comparative example were prepared, and various performance parameters were measured. The results are as shown in Table 1.

**Table 1**

| | Carbon source | Content of trivalent iron in ferrous oxalate /wt.% | Lithium-iron ratio | Second temperature /°C | Content of conductive agent wt.% | Area proportion of particles with particle size ≥ 1.5 µm and < 5 µm /% | Area proportion of particles particle with size ≥ 5 µm /% | Iron dissolution /ppmrate |
|---|---|---|---|---|---|---|---|---|
| Example 1 | PEG | 0.03 | 1.03 | 770 | 0.80 | 14.62 | 0 | 1058 |
| Example 2 | PEG | 0.03 | 1.02 | 770 | 0.80 | 13.70 | 0 | 890 |
| Example 3 | PEG | 0.03 | 1.01 | 770 | 0.80 | 12.81 | 0 | 658 |
| Example 4 | PEG | 0.03 | 1.05 | 770 | 0.80 | 15.46 | 0 | 1485 |
| Example 5 | PEG | 0.80 | 1.03 | 770 | 0.80 | 15.31 | 0 | 1349 |
| Example 6 | PEG:glucose = 3:1 | 0.03 | 1.03 | 770 | 0.80 | 14.92 | 0 | 1143 |
| Example 7 | PEG:glucose = 2:1 | 0.03 | 1.03 | 770 | 0.80 | 15.39 | 0 | 1236 |
| Example 8 | PEG:glucose = 1:2 | 0.03 | 1.03 | 770 | 0.80 | 16.02 | 0 | 1384 |
| Example 9 | PEG:glucose = 1:3 | 0.03 | 1.03 | 770 | 0.80 | 16.89 | 0 | 1531 |
| Examples 10 | PEG | 0.03 | 1.03 | 770 | 0 | 14.58 | 0 | 1076 |
| Examples 11 | PEG | 0.03 | 1.03 | 755 | 0.80 | 9.02 | 0 | 1311 |
| Examples 12 | PEG:glucose = 1:3 | 0.03 | 1.05 | 770 | 0.80 | 18.21 | 0 | 1921 |
| Comparative Example 1 | Glucose | 0.03 | 1.05 | 810 | 0.80 | 21.78 | 0 | 2365 |
| Comparative Example 2 | PEG | 0.03 | 1.01 | 745 | 0.80 | 7.20% | 0 | 487 |
| Comparative Example 3 | Glucose | 0.03 | 1.06 | 740 | 0.80 | 9.63 | 0 | 2105 |

**Continued Table 1**

| | B₅₀ | Area proportion of particles with particle size ≥ 200 nm and < 1,500 nm /% | Area proportion of particles with particle size ≥ 1 µm nm and < 1.5 µm /% | Compaction density in fully discharged state g/cm³ | DC internal resistance 25°C 3 C 20% SOC /mΩ | DC internal resistance - 25°C 1 C 50% SOC /mΩ | Energy density Wh/L |
|---|---|---|---|---|---|---|---|
| Example 1 | 0.443 | 75.10 | 19.66 | 2.55 | 43.4 | 388.0 | 444.8 |
| Example 2 | 0.437 | 75.47 | 20.28 | 2.53 | 44.35 | 391.6 | 441.5 |
| Example 3 | 0.432 | 75.83 | 20.89 | 2.51 | 45.3 | 395.2 | 438.1 |
| Example 4 | 0.450 | 75.24 | 18.41 | 2.58 | 47.7 | 395.2 | 449.8 |
| Example 5 | 0.448 | 75.45 | 19.23 | 2.57 | 46.2 | 423.7 | 426.2 |
| Example 6 | 0.445 | 75.42 | 20.25 | 2.56 | 45.2 | 421.3 | 446.5 |
| Example 7 | 0.449 | 75.67 | 19.31 | 2.57 | 45.4 | 411.4 | 448.1 |
| Example 8 | 0.453 | 76.21 | 18.88 | 2.58 | 46.7 | 421.7 | 447.5 |
| Example 9 | 0.459 | 76.66 | 18.28 | 2.59 | 48.2 | 428.8 | 446.9 |
| Example 10 | 0.443 | 75.07 | 19.70 | 2.56 | 43.6 | 390.1 | 443.3 |
| Example 11 | 0.398 | 78.57 | 23.88 | 2.51 | 40.0 | 356.2 | 438.1 |
| Example 12 | 0.465 | 73.78 | 15.57 | 2.60 | 49.3 | 441.9 | 437.4 |
| Comparative Example 1 | 0.489 | 72.34 | 14.72 | 2.63 | 50.3 | 454.0 | 446.7 |
| Comparative Example 2 | 0.345 | 81.02 | 25.23 | 2.38 | 47.7 | 430.7 | 415.6 |
| Comparative Example 3 | 0.480 | 79.02 | 22.50 | 2.43 | 40.9 | 368.6 | 424.8 |

From the comparison of the data between the examples and the comparative examples, it can be seen that when the area proportion of the particles with a particle size greater than or equal to 1.5 µm is greater than or equal to 8.0% and less than or equal to 20.0%, and the iron dissolution rate of the positive electrode film layer ranges from 658 ppm to 1,921 ppm, the battery has a high positive electrode plate compaction density and energy density, and also has good kinetic performance.

From the comparison between Examples 9 and 12 and other examples, it can be seen that when the iron dissolution rate of the positive electrode film layer ranges from 658 ppm to 1,485 ppm, it can further reduce the DC internal resistance of the battery.

From the comparison of the data between the examples and the comparative examples, it can be seen that when the area proportion of the particles with a particle size greater than or equal to 1.5 µm and less than 5 µm ranges from 9.0% to 20.0%, it helps to further improve the compaction density and energy density of the positive electrode plate.

From the comparison between Example 11 and other examples, it can be seen that when the area proportion of the particles with a particle size greater than or equal to 200 nm and less than 1,500 nm in the cross section of the positive electrode film layer along the thickness direction of the electrode plates ranges from 73.0% to 78.0%, it helps to further improve the energy density of the battery.

It needs to be noted that the present application is not limited to the embodiments above. The above described examples are merely exemplary, and examples having substantially the same technical idea and the same effects within the scope of the technical solution of the present application are all included in the technical scope of the present application. In addition, other examples constructed by applying various modifications conceivable to those skilled in the art to the examples and combining some of the constituent elements of the examples without departing from the scope of the essence of the present application are also included in the scope of the present application.

## Claims

1. A lithium-ion secondary battery, comprising a positive electrode plate, a negative electrode plate, and an electrolyte, wherein the positive electrode plate comprises a positive electrode current collector and a positive electrode film layer arranged on at least one side of the positive electrode current collector, the positive electrode film layer comprises a positive electrode active material, the positive electrode active material comprises lithium-containing transition metal phosphate particles at least partially provided with a carbon coating material on surfaces, the area proportion of particles with a particle size greater than or equal to 1.5 µm in a cross section of the positive electrode film layer along a thickness direction of the electrode plate is greater than or equal to 8.0% and less than or equal to 20.0%; and the iron dissolution rate of the positive electrode film layer ranges from 658 ppm to 1,921 ppm.

2. The lithium-ion secondary battery according to claim 1, wherein the iron dissolution rate of the positive electrode film layer ranges from 658 ppm to 1,485 ppm.

3. The lithium-ion secondary battery according to claim 1 or 2, wherein
in a coating coverage index B cumulative distribution curve of the positive electrode film layer obtained in a surface scanning mode of a laser microscopic confocal Raman spectrometer, the median B₅₀ of the coating coverage index ranges from 0.35 to 0.48, wherein the coating coverage index B is I_{P}/I_{D}, where I_{P} represents the intensity of a P-band in a Raman spectrum at 948±100 cm⁻¹, and I_{D} represents the intensity of a D-band in the Raman spectrum at 1,350±100 cm⁻¹.

4. The lithium-ion secondary battery according to any one of claims 1 to 3, wherein the area proportion of particles with a particle size greater than or equal to 5 µm in the cross section of the positive electrode film layer along the thickness direction of the electrode plate is 0.

5. The lithium-ion secondary battery according to any one of claims 1 to 4, wherein the area proportion of particles with a particle size greater than or equal to 1.5 µm and less than 5 µm in the cross section of the positive electrode film layer along the thickness direction of the electrode plate ranges from 9.0% to 20.0%, optionally from 10.0% to 20.0%.

6. The lithium-ion secondary battery according to any one of claims 1 to 5, wherein the area proportion of particles with a particle size greater than or equal to 1 µm and less than 1.5 µm in the cross section of the positive electrode film layer along the thickness direction of the electrode plate ranges from 15.0% to 25.0%, optionally from 16.0% to 24.0%.

7. The lithium-ion secondary battery according to any one of claims 1 to 6, wherein the area proportion of the particles with a particle size greater than or equal to 200 nm and less than 1500 nm in the cross section of the positive electrode film layer along the thickness direction of the electrode plate ranges from 73.0% to 80.0%, optionally from 73.0% to 78.0%.

8. The lithium-ion secondary battery according to any one of claims 1 to 7, wherein in a graphitization degree C value cumulative distribution curve of the positive electrode film layer obtained in a surface scanning mode of a laser microscopic confocal Raman spectrometer, the median C₅₀ of graphitization degree ranges from 0.95 to 1.20, optionally from 0.98 to 1.15, and further optionally from 1.0 to 1.10, wherein a graphitization degree C value is I_{G}/I_{D}, where I_{G} represents the intensity of a G-band in a Raman spectrum at 1,580±100cm⁻¹, and I_{D} represents the intensity of a D-band in the Raman spectrum at 1,350±100 cm⁻¹.

9. The lithium-ion secondary battery according to any one of claims 1 to 8, wherein in a sphericity area cumulative distribution curve of the particles obtained from the cross section of the positive electrode film layer along the thickness direction of the electrode plate, the median L_{A50} of sphericity ranges from 0.65 to 0.85, optionally from 0.70 to 0.80.

10. The lithium-ion secondary battery according to any one of claims 1 to 9, wherein in a roughness area cumulative distribution curve of the particles obtained from the cross section of the positive electrode film layer along the thickness direction of the electrode plate, the median R_{A50} of roughness of the particles ranges from 0.92 to 0.96.

11. The lithium-ion secondary battery according to any one of claims 1 to 10, wherein based on the total mass of the positive electrode active material, the mass content of a carbon element ranges from 0.8% to 1.8%, optionally from 0.90% to 1.50%.

12. The lithium-ion secondary battery according to any one of claims 1 to 11, wherein the lithium-iron antisite defect concentration of the positive electrode active material ranges from 0.1% to 1.5%, optionally from 0.3% to 1.0%.

13. The lithium-ion secondary battery according to any one of claims 1 to 12, wherein the lithium-containing transition metal phosphate comprises a component represented by the following general formula:
LiₘFeₓP_{y}OⱼQ_{q},
where Q comprises one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

14. The lithium-ion secondary battery according to any one of claims 1 to 13, wherein the positive electrode active material comprises one or more of lithium iron phosphate, and doped modified materials and coated modified materials thereof.

15. The lithium-ion secondary battery according to any one of claims 1 to 14, wherein the positive electrode active material comprises a titanium element, and based on the total mass of the positive electrode active material, the mass content of the titanium element ranges from 2,000 ppm to 6,000 ppm.

16. The lithium-ion secondary battery according to any one of claims 1 to 15, wherein the powder tap density of the positive electrode active material ranges from 0.70 g/cm³ to 1.50 g/cm³, optionally from 0.70 g/cm³ to 1.20 g/cm³; and/or the powder compaction density of the positive electrode active material under a pressure of 3T ranges from 2.50 g/cm³ to 2.70 g/cm³, optionally from 2.52 g/cm³ to 2.68 g/cm³.

17. The lithium-ion secondary battery according to any one of claims 1 to 16, wherein the powder resistivity of the positive electrode active material at a pressure of 8 MPa ranges from 0.5 Ω·cm to 30.0 Ω·cm, optionally from 2.0 Ω·cm to 20.0 Ω·cm.

18. The lithium-ion secondary battery according to any one of claims 1 to 17, wherein the discharge gram capacity of the positive electrode active material at a discharge rate of 1 C ranges from 135 mAh/g to 150 mAh/g.

19. The lithium-ion secondary battery according to any one of claims 1 to 18, wherein the discharge capacity ratio η of the positive electrode active material discharged to 3.2 V is ≥ 85%, where η is defined as: at room temperature, a button battery containing the positive electrode active material is charged and discharged twice at a constant current at a rate of 0.1 C within a voltage range from 2.0 V to 3.75 V, and then charged and discharged once via a constant current at a rate of 1 C, and in a charge-discharge test at the rate of 1 C, a capacity value extracted at a discharge voltage of 3.2 V is denoted as C₁, and a capacity value extracted at a discharge voltage of 2.0 V is denoted as C₂, where η=C₁/C₂, wherein a charging process comprises constant-voltage charging, with a constant voltage of 3.75 V and a constant-voltage cutoff current of 50 µA.

20. The lithium-ion secondary battery according to any one of claims 1 to 19, wherein in a 0.1 C discharge curve of the button battery containing the positive electrode active material, a discharge plateau exists within a voltage range from 2.5 V to 2.9 V.

21. The lithium-ion secondary battery according to any one of claims 1 to 20, wherein based on the total mass of the positive electrode film layer, the mass content of a conductive agent ranges from 0 to 1.5%, and is optionally 0.

22. The lithium-ion secondary battery according to any one of claims 1 to 21, wherein the positive electrode film layer further comprises a binder, and based on the total mass of the positive electrode film layer, the mass content of the positive electrode active material ranges from 95.5% to 99.5%, optionally from 96.5% to 99.5%; and the mass content of the binder ranges from 0.5% to 3%.

23. The lithium-ion secondary battery according to any one of claims 1 to 22, wherein the single-side areal density of the positive electrode film layer ranges from 300 mg/1,540 mm² to 450 mg/1,540 mm².

24. The lithium-ion secondary battery according to any one of claims 1 to 23, wherein in a fully discharged state of the lithium-ion secondary battery, the compaction density of the positive electrode film layer ranges from 2.51 g/cm³ to 2.73 g/cm³.

25. The lithium-ion secondary battery according to any one of claims 1 to 24, wherein in a fully discharged state of the lithium-ion secondary battery, the compaction density of the positive electrode film layer ranges from 2.55 g/cm³ to 2.70 g/cm³.

26. The lithium-ion secondary battery according to any one of claims 1 to 25, wherein the positive electrode film layer satisfies at least one of the following conditions:
(1) in a fully discharged state of the lithium-ion secondary battery, the compaction density of the positive electrode film layer ranges from 2.51 g/cm³ to 2.73 g/cm³, and the porosity of the positive electrode film layer in the cross section of the positive electrode film layer along the thickness direction of the electrode plate ranges from 10% to 22%; and
(2) in the fully discharged state of the lithium-ion secondary battery, the compaction density of the positive electrode film layer ranges from 2.55 g/cm³ to 2.70 g/cm³, and the porosity of the positive electrode film layer in the cross section of the positive electrode film layer along the thickness direction of the electrode plate ranges from 10% to 20%.

27. The lithium-ion secondary battery according to any one of claims 1 to 26, wherein the positive electrode plate comprises a primer layer, and the primer layer is arranged between the positive electrode film layer and the current collector; the primer layer satisfies at least one of the following conditions:
(1) the primer layer comprises carbon-based particles, and the distribution density of the carbon-based particles with a particle size greater than 100 nm in the primer layer is ≤ 10 pcs/10 µm;
(2) the compaction density of the positive electrode plate in a fully discharged state is greater than or equal to 2.4 g/cm³, and the single-side thickness of the primer layer ranges from 1 µm to 4 µm; and
(3) the compaction density of the positive electrode plate in the fully discharged state is greater than or equal to 2.5 g/cm³, and the single-side thickness of the primer layer ranges from 2 µm to 4 µm.

28. A battery apparatus, comprising the lithium-ion secondary battery according to any one of claims 1 to 27, wherein the battery apparatus comprises at least one of a battery cell, a battery module, a battery pack, and an energy storage battery.

29. A power consuming apparatus, comprising the lithium-ion secondary battery according to any one of claims 1 to 27 or the battery apparatus according to claim 28.

30. A preparation method for a positive electrode active material, comprising: obtaining a mixed raw material comprising a carbon source, a lithium source, an iron source, and a phosphorus source, wherein the carbon source comprises a polymer carbon source, the mass content of a trivalent iron element in the iron source is less than or equal to 0.08%, and the molar ratio of lithium to iron in the mixed raw material is greater than or equal to 1 and less than or equal to 1.05; performing grinding to obtain a mixed slurry; drying the mixed slurry to obtain precursor powder; and sintering the precursor powder and performing crushing to obtain the positive electrode active material, wherein the sintering comprises a first temperature and a second temperature, and the second temperature for the sintering ranges from 750°C to 800°C.

31. A preparation for a positive electrode plate, comprising: sequentially adding a binder, a conductive agent, and the positive electrode active material prepared by adopting the preparation method according to claim 30, performing dry mixing, then adding a solvent, and performing stirring to obtain a finished slurry; and transfer-coating the finished slurry to at least one side of a current collector, and preforming drying and hot-pressing to obtain the positive electrode plate.

32. The preparation method according to claim 31, wherein the stirring comprises pre-stirring and main stirring, the revolution speed for the main stirring ranges from 20 rpm to 30 rpm, and the rotation speed ranges from 1,450 rpm to 1,550 rpm.

33. The preparation method according to claim 31 or 32, wherein the hot-pressing comprises at least three times of hot roll pressing, the hot roll pressing force increases sequentially, and the hot roll pressing force respectively ranges from 20 tons to 50 tons, from 50 tons to 70 tons, and from 70 tons to 90 tons; the hot roll temperature ranges from 40°C to 80°C, the electrode plate is heated before entering hot roll compaction for a first time, and the temperature for the heating ranges from 40°C to 50°C.
